# EUROPEAN PATENT APPLICATION

(11) **EP 4 243 200 A1**
(43) Date of publication of application: **13.09.2023**
(21) Application number: 21913889.8
(22) Date of filing: 14.12.2021
(51) Int. Cl.: H01Q 1/22, H01Q 5/30, H01Q 3/24, H01Q 23/00

(54) **ANTENNA SYSTEM, WIRELESS COMMUNICATION SYSTEM, AND ELECTRONIC DEVICE**

(30) Priority: 29.12.2020 CN 202011599529
(71) Applicant: Huawei Technologies Co., Ltd., Shenzhen, Guangdong 518129 (CN)
(72) Inventor: SHEN, Laiwei, Shenzhen, Guangdong 518129 (CN); XUE, Liang, Shenzhen, Guangdong 518129 (CN); WU, Pengfei, Shenzhen, Guangdong 518129 (CN); YU, Dong, Shenzhen, Guangdong 518129 (CN)
(74) Representative: Goddar, Heinz J.
(86) International application number: PCT/CN2021/137837
(87) International publication number: WO 2022/143148

(57) **Abstract**

Embodiments of this application disclose an antenna system, a wireless communication system, and an electronic device, and relate to the field of communication. By using a switching unit disposed in the antenna system, an electrical connection relationship between an antenna pair and a radio frequency module is flexibly adjusted, resolving a problem that an inherent null in a directivity pattern of an antenna affects communication. A specific solution is as follows: The wireless communication system includes a first radio frequency channel, a first antenna unit, a second antenna unit, and a first switching apparatus. The first switching apparatus is configured to selectively connect at least one of the first antenna unit and the second antenna unit to the first radio frequency channel. In a first state, the first switching apparatus is configured to connect the first antenna unit to the first radio frequency channel, and the first switching apparatus is further configured to connect the second antenna unit to the first radio frequency channel. In a second state, the first switching apparatus is configured to connect the first antenna unit to the first radio frequency channel, and the second antenna unit is disconnected from the first radio frequency channel.

## Description

This application claims priority to Chinese Patent Application No. 202011599529.1, filed with the China National Intellectual Property Administration on December 29, 2020 and entitled "ANTENNA SYSTEM, WIRELESS COMMUNICATION SYSTEM, AND ELECTRONIC DEVICE", which is incorporated herein by reference in its entirety.

### TECHNICAL FIELD

Embodiments of this application relate to the field of communication, and in particular, to an antenna system, a wireless communication system, and an electronic device.

### BACKGROUND

An electronic device can implement wireless communication with another device by using one or more antennas disposed in the electronic device. Therefore, the antenna plays a quite important role in a communication process of the electronic device.

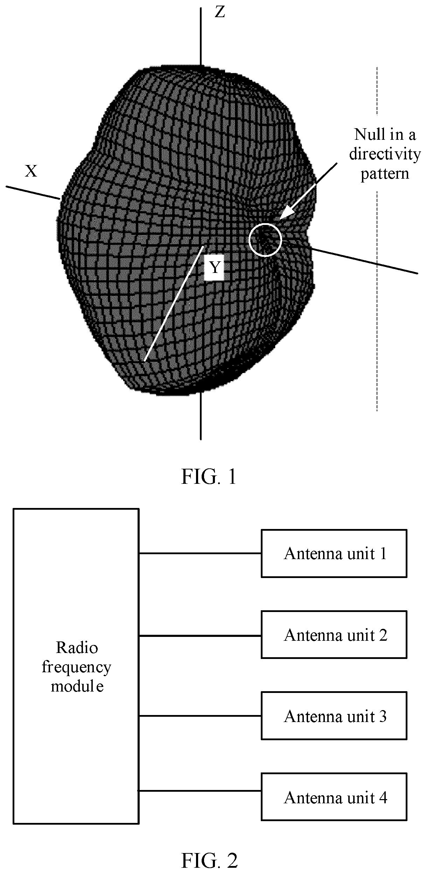

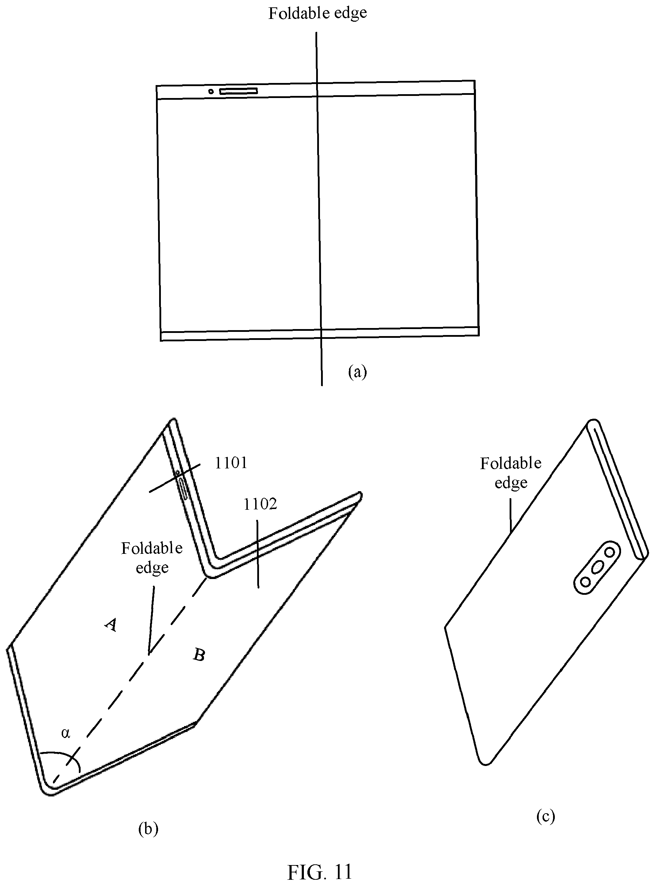

In general, distribution of radiation capabilities of an antenna in space may be represented by a directivity pattern (or referred to as a gain directivity pattern). For example, FIG. 1 is a schematic diagram of a directivity pattern of an antenna. As shown in FIG. 1, the antenna has different gains (Gain) at different angles (Angle). Gains are large at some angles but small at other angles. A larger gain indicates that the antenna has a stronger radiation (for example, transmit or receive) capability at the angle. Correspondingly, a smaller gain indicates that the antenna has a weaker radiation capability at the angle. In this application, an angle at which a gain is far less than a maximum gain may be referred to as a "null in a directivity pattern".

It may be understood that due to presence of the null in the directivity pattern, when a direction of signal arrival in wireless communication corresponds to the null in the directivity pattern, a large bit error rate occurs in reception of an incoming signal or even the incoming signal cannot be received properly, because the antenna has a weak radiation capability in the direction. Likewise, when a signal needs to be transmitted at an angle corresponding to the null in the directivity pattern or at another angle near the angle, a case in which the signal cannot be transmitted properly may also occur. As a result, wireless communication of the electronic device is severely affected.

### SUMMARY

Embodiments of this application provide an antenna system, a wireless communication system, and an electronic device. By using a switching unit disposed in the antenna system, an electrical connection relationship between an antenna pair and a radio frequency module can be flexibly adjusted, reconstructing a directivity pattern of an antenna, and resolving a problem that an inherent null in a directivity pattern of an antenna affects communication. Further, by using the switching unit disposed in the antenna system, the electrical connection relationship between an antenna pair and a radio frequency module can be further flexibly adjusted, reconstructing a quantity of working antennas, and increasing a throughput rate in a scenario requiring a large throughput rate.

To achieve the foregoing objectives, the following technical solutions are used in embodiments of this application.

According to a first aspect, a wireless communication system is provided. The wireless communication system is applied to an electronic device, and includes a first radio frequency channel, a first antenna unit, a second antenna unit, and a first switching apparatus. The first switching apparatus is configured to selectively connect at least one of the first antenna unit and the second antenna unit to the first radio frequency channel. In a first state, the first switching apparatus is configured to connect the first antenna unit to the first radio frequency channel, and the first switching apparatus is further configured to connect the second antenna unit to the first radio frequency channel. In a second state, the first switching apparatus is configured to connect the first antenna unit to the first radio frequency channel, and the second antenna unit is disconnected from the first radio frequency channel.

Based on this solution, a switching apparatus (for example, the first switching apparatus) is disposed in the wireless communication system. The first switching apparatus is controlled to be in different working states, so that the wireless communication system works in different states (for example, the first state or the second state). When the first switching apparatus is in different working states, a radio frequency channel and an antenna unit that are coupled to a front end and a back end of the first switching apparatus may have different electrical connection states. For example, in the first state, the first radio frequency channel is coupled to the first antenna unit, and the first radio frequency channel is further coupled to the second antenna unit. For another example, in the second state, the first radio frequency channel is coupled only to the first antenna unit. It may be understood that because the first radio frequency channel is coupled to different antenna units in different states, radiation patterns corresponding to the wireless communication system are also different in different states. Therefore, when communication in a state is blocked due to presence of a null in a directivity pattern, the wireless communication system may switch from the first state to the second state, or switch from the second state to the first state, or switch from another state to the first state (or the second state), or switch from the first state (or the second state) to another state, to reconstruct a directivity pattern. It may be understood that when the radiation patterns are different, corresponding nulls in the directivity patterns are also different. Therefore, by reconstructing a directivity pattern, a direction of arrival (or a radiation direction) that is originally in a direction in which a null in the directivity pattern is may no longer correspond to a null in a directivity pattern, further resolving a communication blocked problem resulting from a null in a directivity pattern. It should be noted that in this example, the first radio frequency channel may correspond to a radio frequency channel RF2 in an embodiment.

In a possible design, in the first state, signals flowing through the first antenna unit and the second antenna unit are both first signals; and in the second state, a signal flowing through the first antenna unit is a second signal, and the second signal does not flow through the second antenna unit. Based on this solution, an example of distribution of signal flows in the first state and the second state is provided. For example, in the first state, the first switching apparatus connects both the first antenna unit and the second antenna unit to the first radio frequency channel. Therefore, in a transmission scenario, the first signals from the first radio frequency channel may separately flow to the first antenna unit and the second antenna unit for radiation. Correspondingly, in a reception scenario, electromagnetic waves received by the first antenna unit and the second antenna unit may also be separately converted into analog signals (for example, separately corresponding to one first signal) and transmitted to the first radio frequency channel. Likewise, in the second state, the first switching apparatus connects the first antenna unit to the first radio frequency channel, and the second antenna unit is disconnected from the first radio frequency channel. Therefore, only the first antenna unit may be used to transmit a signal from the first radio frequency channel. For example, in a transmission scenario, the first radio frequency channel may send the second signal by using the first antenna unit. For another example, in a reception scenario, the second signal may be generated by the first antenna unit by converting a received electromagnetic wave, and transmitted to the first radio frequency channel. In a possible design, in the first state, a radio frequency parameter of the first signal is a first parameter, and in the second state, a radio frequency parameter of the second signal is a second parameter, where the first parameter and the second parameter are different. Based on this solution, a solution for distinguishing between the first state and the second state is provided. For example, the first state and the second state may be distinguished from each other based on whether the radio frequency parameter is the first parameter or the second parameter. Further, the electronic device may adjust a current working state to the first state or the second state based on the radio frequency parameter, improving the radio frequency parameter in a communication process. It may be understood that while the radio frequency parameter is improved, it means that quality of communication is improved.

In a possible design, the radio frequency parameter includes a reference signal received power RSRP and/or a bit error rate. Based on this solution, a specific example of the radio frequency parameter is provided. For example, the radio frequency parameter may include the RSRP, the bit error rate, both the RSRP and the bit error rate, or the like. Certainly, in some other implementations, the radio frequency parameter may further include more other parameters, for example, a received signal strength (RSSI). This example does not constitute a limitation on specific content of the radio frequency parameter.

In a possible design, the wireless communication system further includes a second radio frequency channel; and in a third state, the first switching apparatus is configured to connect the first antenna unit to the first radio frequency channel, the first switching apparatus is further configured to connect the second antenna unit to the second radio frequency channel, a signal flowing through the first antenna unit is a third signal, and a signal flowing through the second antenna unit is a fourth signal. Based on this solution, a universal extension of the wireless communication system is provided. It may be understood that a change in a coupling relationship of the first radio frequency channel in the wireless system and a corresponding effect are described in the foregoing design. It may be understood that the wireless communication system may include more radio frequency channels, for example, may include the second radio frequency channel. The second radio frequency channel may correspond to a radio frequency channel RF1 in the following embodiment. In the third state, the first switching apparatus couples the first radio frequency channel to the first antenna unit and couples the second radio frequency channel to the second antenna unit. Therefore, when the first radio frequency channel and the second radio frequency channel operate in a same frequency band, in a reception scenario, the electronic device can simultaneously receive two signals (for example, the third signal and the fourth signal) by using the first antenna unit and the second antenna unit. Therefore, when this scenario is compared with an ordinary scenario in which only one signal can be received, a throughput rate can be significantly increased. It should be noted that in this scenario, the third signal and the fourth signal may correspond to two signals that are in a same frequency band. A transmission scenario is similar. Therefore, a similar effect can be achieved. It may be understood that the foregoing description is based on a premise that the first radio frequency channel and the second radio frequency channel operate in a same frequency band. It may be understood that alternatively, the first radio frequency channel and the second radio frequency channel may separately correspond to two transmission channels of parallel data in a multi input multi output scenario, or two transmission channels that separately correspond to synchronously transmitted data in a carrier aggregation scenario. An effect that can be achieved is similar. That is, a quantity of signal flows can be significantly increased, improving quality of communication.

According to a second aspect, a foldable electronic device is provided. The foldable electronic device includes a flexible screen and the wireless communication system according to any one of the first aspect and the possible designs of the first aspect. The foldable electronic device includes a first folded state and a second folded state. In the first folded state, the wireless communication system is in the first state. In the first folded state, the wireless communication system is in the second state.

Based on this solution, an application of the wireless communication system according to the first aspect in a foldable electronic device is provided. The flexible screen may be a foldable screen, may include one or more foldable screens, or may include at least two non-foldable screens. For example, the plurality of states provided in the first aspect and the possible designs of the first aspect may separately correspond to different folded states of the foldable electronic device. In this way, in different forms (for example, a folded state or an unfolded state), a quantity of antenna units is reconstructed, resolving a communication blocked problem resulting from a null in a directivity pattern, and further improving quality of communication.

In a possible design, the flexible screen includes a first part and a second part, the first antenna unit is located in the first part, the second antenna unit is located in the second part, and the first part and the second part rotate relative to each other. Based on this solution, an example of a correspondence between the flexible screen and the antenna units is provided. The first antenna unit in this example is located in the first part. In specific implementation, the first antenna unit may be in the first part of the flexible screen. In some other implementations, the first antenna unit may alternatively be in a projected area corresponding to the first part of the flexible screen in a direction Z. A positional relationship between the second antenna unit and the second part is similar. It should be noted that only a possible positional relationship is provided in this example, that is, the two antenna units may be located in different foldable screens. In some other implementations, the two antenna units may be alternatively located in a same foldable screen.

According to a third aspect, a wireless communication method is provided. The method is applied to an electronic device. The electronic device is provided with the wireless communication system according to any one of the first aspect and the possible designs of the first aspect, and one or more processors. The method includes: The processor sends first control information to the first switching apparatus, where the first control information is used to control the first switching apparatus to work in a first working state, and in the first working state, the first switching apparatus is configured to connect the first antenna unit to the first radio frequency channel, and the first switching apparatus is further configured to connect the second antenna unit to the first radio frequency channel; or the processor sends second control information to the first switching apparatus, where the second control information is used to control the first switching apparatus to work in a second working state, and in the first working state, the first switching apparatus is configured to connect the first antenna unit to the first radio frequency channel, and the second antenna unit is disconnected from the first radio frequency channel.

In a possible design, when the first switching apparatus is in the first working state, signals flowing through the first antenna unit and the second antenna unit are both first signals; and when the first switching apparatus is in the second working state, a signal flowing through the first antenna unit is a second signal, and the second signal does not flow through the second antenna unit.

In a possible design, when the first switching apparatus is in the first working state, a radio frequency parameter of the first signal is a first parameter, and when the first switching apparatus is in the second working state, a radio frequency parameter of the second signal is a second parameter, where the first parameter and the second parameter are different.

In a possible design, the radio frequency parameter includes a reference signal received power RSRP and/or a bit error rate.

In a possible design, the processor sends third control information to the first switching apparatus, where the third control information is used to control the first switching apparatus to work in a third working state; and in the third working state, the first switching apparatus is configured to connect the first antenna unit to the first radio frequency channel, the first switching apparatus is further configured to connect the second antenna unit to the second radio frequency channel, a signal flowing through the first antenna unit is a third signal, and a signal flowing through the second antenna unit is a fourth signal.

According to a fourth aspect, a processor is provided. The processor is disposed in an electronic device, and the processor is configured to perform the wireless communication method according to any one of the third aspect and the possible designs of the third aspect.

According to a fifth aspect, an electronic device is provided. The electronic device is provided with one or more processors according to the fourth aspect, a memory, and the wireless communication system according to any one of the first aspect and the possible designs of the first aspect. The one or more processors are coupled to the memory and the wireless communication system. The memory stores computer instructions. When the one or more processors execute the computer instructions, the electronic device is enabled to perform the wireless communication method according to any one of the third aspect and the possible designs of the third aspect.

It should be understood that technical characteristics of the technical solutions provided in the third aspect, the fourth aspect, and the fifth aspect may all correspond to the technical solutions provided in the first aspect and the possible designs of the first aspect. Therefore, beneficial effects that can be achieved are similar, and details are not described herein again.

According to a sixth aspect, an antenna system is provided. The antenna system is applied to an electronic device and includes N switching apparatuses and M antenna units. One switching apparatus corresponds to at least two antenna units. At least two antenna units corresponding to one switching apparatus constitute one antenna pair. N is a positive integer. M is an integer greater than N. An output terminal of a first switching apparatus is coupled to a first antenna pair. The first switching apparatus is any one of the N switching apparatuses. At least two antenna units included in the first antenna pair are included in the M antenna units. The first switching apparatus has a first working state and a second working state. When the first switching apparatus works in the first working state, a direction in which a null in a directivity pattern of the antenna system is is a first direction. When the first switching apparatus works in the second working state, a direction in which a null in a directivity pattern of the antenna system is is a second direction. The first direction and the second direction are different.

Based on this solution, an antenna system is provided that can resolve a communication blocked problem resulting from a null in a directivity pattern. In the antenna system, the N disposed switching apparatuses are innovatively provided. By controlling a working status of the switching apparatus, a directivity pattern (that is, a directivity pattern of the antenna system) of an antenna unit that is in a working state can be flexibly adjusted based on an environment. For example, the directivity pattern of the antenna system in the first working state may present a different distribution than the directivity pattern of the antenna system in the second working state, so that the nulls in the directivity patterns are also in different positions in different working states. In this way, for blocked communication that may occur because a null in a directivity pattern in a state is close to a signal direction, the working status may switch to another state. A directivity pattern is reconstructed, so that the null in the directivity pattern shifts, avoiding that the signal direction and the null in the directivity pattern overlap, and further avoiding blocked communication that results from the null in the directivity pattern.

In a possible design, frequency bands covered by the at least two antenna units that are included in the first antenna pair partially or completely overlap. Based on this solution, an example of a possible antenna pair setting is provided. For example, two antenna units forming an antenna pair may have operating frequency bands that partially overlap. In this way, when reception and transmission of signals are performed in the operating frequency band, a directivity pattern can be reconstructed by adjusting a quantity of antenna units in a working state in the antenna pair, without affecting reception and transmission of signals.

In a possible design, the first switching apparatus works in the first working state; and when a reference signal received power RSRP is less than a first threshold, or when a bit error rate is greater than a second threshold, or when an RSRP is less than a first threshold and a bit error rate is greater than a second threshold, a working status of the first switching apparatus switches from the first working state to the second working state. Based on this solution, a possible correspondence between a working status and another parameter is provided. Based on the correspondence, the electronic device may flexibly select a corresponding working state based on a change in a parameter (for example, a radio frequency parameter), to flexibly reconstruct a directivity pattern based on a communication environment.

In a possible design, a quantity of antenna units performing signal reception and/or transmission in the first antenna pair in a case in which the first switching apparatus works in the first working state differs from a quantity of antenna units performing signal reception and/or transmission in the first antenna pair in a case in which the second switching apparatus works in the first working state. Based on this solution, a possible mechanism for implementing reconstruction of a directivity pattern is provided. For example, a directivity pattern can be reconstructed by adjusting quantities of working antenna units in different working states. It may be understood that a directivity pattern existing when there is only one antenna unit in a working state is usually different from a directivity pattern of another antenna unit, and is also different from a directivity pattern obtained through combination in a case in which two antenna units work simultaneously. Therefore, a directivity pattern can be reconstructed by reconstructing a quantity of antenna units in a working state.

In a possible design, when a throughput rate of the electronic device is less than a third threshold, the first switching apparatus works in the first working state. Based on this solution, an example of a mechanism for determining a working state is provided. In this example, in a scenario in which a large throughput rate is not required, the electronic device may control the first switching apparatus to work in the first working state. Certainly, in some other implementations, in the scenario in which a large throughput rate is not required, the electronic device may alternatively control the first switching apparatus to work in the second working state.

In a possible design, the first switching apparatus further has a third working state, and a quantity of antenna units performing signal reception and/or transmission in the first antenna pair in a case in which the first switching apparatus works in the third working state is greater than a quantity of antenna units performing signal reception and/or transmission in the first antenna pair in a case in which the first switching apparatus is in the first working state or is in the second working state; and when the throughput rate of the electronic device is greater than a fourth threshold, the first switching apparatus works in the third working state, where the fourth threshold is greater than or equal to the third threshold. Based on this solution, an example of another solution for flexibly and easily increasing a throughput rate is provided. In this example, the two antenna units may be controlled to work simultaneously to perform signal reception and transmission, for example, transmit respective received signals to a front end separately through different radio frequency channels, to implement a plurality of flows. In this way, a throughput rate is increased.

In a possible design, the antenna system further includes a second switching apparatus and a second antenna pair; an output terminal of the second switching apparatus is coupled to the second antenna pair, the second switching apparatus is any one of the N switching apparatuses, and at least two antenna units included in the second antenna pair are included in the M antenna units; and the second switching apparatus has at least a first working state and a second working state; when the first switching apparatus works in the first working state, a direction in which a null in a directivity pattern of the antenna system is is a first direction; when the first switching apparatus works in the second working state, a direction in which a null in a directivity pattern of the antenna system is is a second direction; and the first direction and the second direction are different. Based on this solution, a mechanism including more switching apparatuses and corresponding antenna pairs is provided. It may be understood that in the antenna system of the electronic device, more first switching apparatuses and corresponding antenna pairs mentioned in the foregoing example may be disposed and perform similar work. In this way, a solution for improving quality of communication more flexibly is provided for the electronic device.

According to a seventh aspect, a wireless communication system is provided. The wireless communication system includes the antenna system according to any one of the sixth aspect and the possible designs of the sixth aspect, and a radio frequency module. The radio frequency module is separately coupled to input terminals of the N switching apparatuses. The radio frequency module is configured to: transmit, through one or more of the N switching apparatuses, a transmit signal to one or more antenna pairs corresponding to the one or more switching apparatuses, so that the transmit signal is sent out by an antenna; or receive, through one or more of the N switching apparatuses, a receive signal from one or more antenna pairs corresponding to the one or more switching apparatuses, and process the receive signal.

In a possible design, the radio frequency module includes a first radio frequency channel, the first antenna pair includes a first antenna unit and a second antenna unit, and an operating frequency band of the first antenna unit and an operating frequency band of the second antenna unit partially or completely overlap. When the first switching apparatus works in the first working state, the first radio frequency channel is coupled to the first antenna unit. For transmission of a transmit signal, the first radio frequency channel sends the transmit signal by using the first antenna unit. For reception of a receive signal, the first radio frequency channel receives the receive signal from the first antenna unit. When the first switching apparatus works in the second working state, the first radio frequency channel is coupled to the first antenna unit and the second antenna unit. For transmission of a transmit signal, the first radio frequency channel sends the transmit signal by using the first antenna unit and the second antenna unit. For reception of a receive signal, the first radio frequency channel receives the receive signal from the first antenna unit and the second antenna unit.

In a possible design, the radio frequency module includes a first radio frequency channel, the first antenna pair includes the first antenna unit and the second antenna unit, and the operating frequency band of the first antenna unit and the operating frequency band of the second antenna unit partially or completely overlap. When the first switching apparatus works in the third working state, the first radio frequency channel is coupled to the first antenna unit, and the second radio frequency channel is coupled to the second antenna unit. For transmission of transmit signals, the first radio frequency channel sends a corresponding first transmit signal by using the first antenna unit, and the second radio frequency channel sends a corresponding second transmit signal by using the second antenna unit. For reception of receive signals, the first radio frequency channel receives a receive signal from the first antenna unit, and the second radio frequency channel receives a receive signal from the second antenna unit.

According to an eighth aspect, a wireless communication method is provided. The method is applied to an electronic device. The electronic device is provided with the wireless communication system according to any one of the seventh aspect and the possible designs of the seventh aspect, and a processor coupled to control terminals of the N switching apparatuses. The method includes: The processor sends first control information to the first switching apparatus, to control the first switching apparatus to work in a first working state. When a reference signal received power RSRP is less than a first threshold, or when a bit error rate is greater than a second threshold, or when an RSRP is less than a first threshold and a bit error rate is greater than a second threshold, the processor sends second control information to the first switching apparatus, to control the first switching apparatus to work in a second working state.

In a possible design, before the processor sends the first control information to the first switching apparatus, the method further includes: The processor determines that a throughput rate of the electronic device is less than a third threshold.

In a possible design, when determining that the throughput rate of the electronic device is greater than a fourth threshold, the processor sends third control information to the first switching apparatus, to control the first switching apparatus to work in a third working state.

According to a ninth aspect, a processor is provided. The processor is disposed in an electronic device, and the processor is configured to perform the wireless communication method according to any one of the eighth aspect and the possible designs of the eighth aspect.

According to a tenth aspect, an electronic device is provided. The electronic device is provided with one or more processors according to the ninth aspect, a memory, and the wireless communication system according to any one of the seventh aspect and the possible designs of the seventh aspect. The one or more processors are coupled to the memory and the wireless communication system. The memory stores computer instructions. When the one or more processors execute the computer instructions, the electronic device is enabled to perform the wireless communication method according to any one of the eighth aspect and the possible designs of the eighth aspect.

It should be understood that technical characteristics of the technical solutions provided in the seventh aspect, the eighth aspect, the ninth aspect, and the tenth aspect may all correspond to the technical solutions provided in the sixth aspect and the possible designs of the sixth aspect. Therefore, beneficial effects that can be achieved are similar, and details are not described herein again.

According to an eleventh aspect, an electronic device is provided. The electronic device is provided with a foldable screen and the wireless communication system according to any one of the seventh aspect and the possible designs of the seventh aspect. When the foldable screen is in a first folded state, the first switching apparatus in the wireless communication system works in a first working state, and when the foldable screen is in a second folded state, the first switching apparatus in the wireless communication system works in a second working state. Alternatively, when the foldable screen is in a first folded state, the first switching apparatus in the wireless communication system works in a second working state, and when the foldable screen is in a second folded state, the first switching apparatus in the wireless communication system works in a first working state. In the first folded state, an included angle between a first screen and a second screen of the foldable screen is less than 90 degrees. In the second folded state, an included angle between a first screen and a second screen of the foldable screen is greater than 90 degrees.

According to a twelfth aspect, a chip system is provided. The chip system includes an interface circuit and a processor. The interface circuit and the processor are interconnected by using a line. The interface circuit is configured to receive a signal from a memory, and send a signal to the processor, where the signal includes computer instructions stored in the memory. When the processor executes the computer instructions, the chip system performs the wireless communication method according to any one of the items in the foregoing examples.

According to a thirteenth aspect, a computer-readable storage medium is provided. The computer-readable storage medium includes computer instructions. When the computer instructions are run, the wireless communication method according to any one of the items in the foregoing examples is performed.

According to a fourteenth aspect, a computer program product is provided. The computer program product includes instructions. When the computer program product is run on a computer, the computer is enabled to perform, according to the instructions, the wireless communication method according to any one of the items in the foregoing examples.

### BRIEF DESCRIPTION OF DRAWINGS

FIG. 1 is a schematic diagram of a directivity pattern of a typical antenna;
FIG. 2 is a schematic diagram of an antenna system;
FIG. 3 is a schematic diagram of antenna switching;
FIG. 4 is a schematic diagram of a distributed antenna system;
FIG. 5 is a schematic diagram of composition of an electronic device according to an embodiment of this application;
FIG. 6 is a schematic diagram of composition of an antenna system according to an embodiment of this application;
FIG. 7 is a schematic diagram of detailed composition of an antenna system according to an embodiment of this application;
FIG. 8 is a schematic diagram of antenna switching according to an embodiment of this application;
FIG. 9 is a schematic diagram of another antenna switching according to an embodiment of this application;
FIG. 10 is a schematic flowchart of an antenna switching method according to an embodiment of this application;
FIG. 11 is a schematic diagram of an electronic device with a foldable screen according to an embodiment of this application;
FIG. 12 is a schematic diagram of another electronic device with a foldable screen according to an embodiment of this application;
FIG. 13 is a schematic diagram of antenna distribution in an electronic device with a foldable screen according to an embodiment of this application;
FIG. 14 is a schematic diagram of another antenna switching of an electronic device with a foldable screen according to an embodiment of this application;
FIG. 15 is a schematic diagram of comparison for a directivity pattern reconstruction effect according to an embodiment of this application;
FIG. 16 is a schematic diagram of another antenna distribution in an electronic device with a foldable screen according to an embodiment of this application;
FIG. 17 is a schematic diagram of another antenna distribution in an electronic device with a foldable screen according to an embodiment of this application;
FIG. 18 is a schematic diagram of another antenna distribution in an electronic device with a foldable screen according to an embodiment of this application;
FIG. 19 is a schematic diagram of another electronic device according to an embodiment of this application; and
FIG. 20 is a schematic diagram of a chip system according to an embodiment of this application.

### DESCRIPTION OF EMBODIMENTS

The following describes the technical solutions in embodiments of this application with reference to the accompanying drawings in embodiments of this application. In a description of embodiments of this application, "/" means "or" unless otherwise specified. For example, A/B may represent A or B. In this specification, "and/or" is merely an association relationship describing associated objects, indicating that three relationships may exist. For example, A and/or B may represent the following three cases: Only A exists, both A and B exist, and only B exists. In addition, in the description of embodiments of this application, "a plurality of" means two or more.

The terms "first" and "second" mentioned below are merely intended for a purpose of description, and shall not be understood as an indication or implication of relative importance or implicit indication of a quantity of indicated technical characteristics. Therefore, a characteristic limited by "first" or "second" may explicitly or implicitly indicate that one or more characteristics are included. In the description of embodiments, "a plurality of" means two or more unless otherwise specified.

An electronic device may be provided with one or more antenna units. Each antenna unit is coupled to a corresponding radio frequency module, to implement transmission and reception of signals. For example, in a reception process, the electronic device may convert an electromagnetic wave in space into a current signal with different characteristics by using an antenna, and parse the current signal by using a radio frequency module. In this way, the electronic device can obtain information carried by the electromagnetic wave. In a transmission process, the electronic device may further feed, into an antenna by using a radio frequency module, an electrical signal that is loaded with information to be sent, so that the antenna can convert the electrical signal into an electromagnetic wave on a corresponding frequency and transmit the electromagnetic wave. Further, when receiving the electromagnetic wave, another device may receive the electromagnetic wave by using an antenna disposed in the another device. In this way, wireless transmission of the information is implemented.

For example, FIG. 2 is a schematic diagram of an antenna system. As shown in FIG. 2, a plurality of antenna units (such as an antenna unit 1, an antenna unit 2, an antenna unit 3, and an antenna unit 4 shown in FIG. 2) may be disposed in the antenna system. Operating frequency bands of any two antenna units may be the same or different. A collection of operating frequency bands of all the four antenna units can cover a wireless communication frequency band required by an electronic device. The antenna system can be used to transmit and receive signals. For example, the antenna unit 1 is controlled to transmit a signal. A radio frequency module may feed an electrical signal in a frequency band f1 into the antenna unit 1. The operating frequency band of the antenna unit 1 covers the frequency band f1. The antenna unit 1 may convert the fed-in electrical signal into an electromagnetic wave for propagation in space, implementing sending of the electrical signal. Likewise, the radio frequency module may control other antenna units (such as the antenna unit 2, the antenna unit 3, and the antenna unit 4) to send a signal. For another example, the antenna unit 1 is controlled to receive a signal. The antenna unit 1 may receive an electromagnetic wave corresponding to the operating frequency band of the antenna unit 1, and convert the electromagnetic wave into an electrical signal with a corresponding characteristic (for example, with a corresponding amplitude and a corresponding phase). The electrical signal may be transmitted to the radio frequency module, so that the radio frequency module parses the electrical signal to obtain information loaded in the electrical signal. In this way, reception of the signal is implemented. Likewise, other antenna units (such as the antenna unit 2, the antenna unit 3, and the antenna unit 4) may also receive electromagnetic waves in corresponding frequency bands and convert the electromagnetic waves into electrical signals. The electrical signals are parsed by the radio frequency module. In this way, corresponding signal reception is implemented.

In a fixed antenna radiation solution, signals on different frequencies are received/transmitted by fixed antennas. For example, still with reference to FIG. 1, the operating frequency bands of the antenna unit 1 to the antenna unit 4 are different from each other (for example, the operating frequency band of the antenna unit 1 is a frequency band 1, the operating frequency band of the antenna unit 2 is a frequency band 2, the operating frequency band of the antenna unit 3 is a frequency band 3, and the operating frequency band of the antenna unit 4 is a frequency band 4). When the electronic device needs to perform transmission/reception in the frequency band 1 or a sub-band in the frequency band 1, the electronic device may control the antenna unit 1 to work. Likewise, when the electronic device needs to perform transmission/reception in the frequency band 2 or a sub-band in the frequency band 2, the electronic device may control the antenna unit 2 to work. When the electronic device needs to perform transmission/reception in the frequency band 3 or a sub-band in the frequency band 3, the electronic device may control the antenna unit 3 to work. When the electronic device needs to perform transmission/reception in the frequency band 4 or a sub-band in the frequency band 4, the electronic device may control the antenna unit 4 to work.

In the foregoing solution, when an antenna unit works, distribution of a current on the antenna unit basically does not change. As a result, a null in a directivity pattern of the antenna unit is relatively fixed. Because different antennas all have a null in a directivity pattern, an impact of the nulls in the directivity patterns in a communication process cannot be eliminated.

To resolve the foregoing problem, the following two solutions may be used to reduce an impact of a null in a directivity pattern on wireless communication.

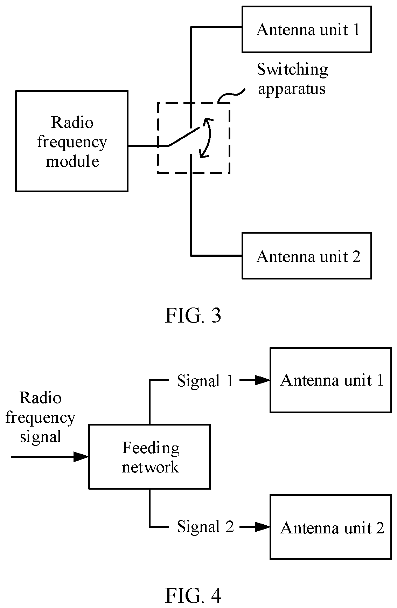

Solution 1: The solution 1 is a multi-antenna-selection (Multi-antenna-selection, MAS) solution. In the solution, a switching apparatus may be disposed between a radio frequency module and antennas. With reference to FIG. 3, for example, a radio frequency module is connected to an antenna unit 1 and an antenna unit 2 by using a switching apparatus. By default, the switching apparatus may connect the radio frequency module to the antenna unit 1 and disconnect the radio frequency module from the antenna unit 2. In other words, by default, an electronic device uses the antenna unit 1 to perform transmission/reception. The electronic device may control the radio frequency module to monitor a related parameter in a transmission/reception process performed by the antenna unit 1. When the related parameter is lower than a preset threshold, it indicates that an effect of transmission/reception currently performed by using the antenna unit 1 is poor. In this case, the electronic device may control the switching apparatus to disconnect the radio frequency module from the antenna unit 1 and connect the radio frequency module to the antenna unit 2. Further, the electronic device switches to use the antenna unit 2 to transmit/receive a signal. Because nulls in directivity patterns of the antenna unit 1 and the antenna unit 2 are usually in different directions, a problem of poor communication quality resulting from the null in the directivity pattern of the antenna unit 1 can be avoided to some extent through antenna unit switching.

However, because there is also a null in the directivity pattern of the antenna unit 2, a potential risk that the null in the directivity pattern affects quality of communication also exists. In addition, it is not true that the nulls in the directivity patterns of the antenna unit 1 and the antenna unit 2 are different in all cases. As electronic devices develop, space for an antenna becomes increasingly small. An area with a low gain near a null in a directivity pattern of a single antenna unit also becomes larger. For example, in a mobile phone with a foldable screen, space that can be used for antenna disposing becomes increasingly small due to factors such as an increase in a screen-to-body ratio and a decrease in a thickness of a mobile phone. As a result, radiation performance of a single antenna is severely affected. It may be understood that quality of a communication process performed in the area with a low gain also encounters a similar problem. Therefore, by using the MAS solution, the problem of poor communication quality resulting from a null in a directivity pattern can only be avoided to a limited extent, but the problem cannot be resolved satisfactorily.

Solution 2: The solution 2 is a distributed antenna solution. It may be understood that in a transmission scenario, when a same radio frequency signal is simultaneously input into two antenna units for transmission, the two antenna units may constitute a distributed antenna. Likewise, in a reception scenario, when two antenna units simultaneously transmit received signals to a radio frequency module, the two antenna units may constitute a distributed antenna. For example, a group of distributed antennas may include one feeding network and two or more antenna units. The plurality of antenna units may be separately located in different positions in an electronic device. With reference to FIG. 4, for example, one feeding network is connected to two antenna units (for example, an antenna unit 1 and an antenna unit 2). When a signal is transmitted, a radio frequency module (not shown in the figure) may feed a radio frequency signal into a distributed antenna. The feeding network in the distributed antenna may perform matching processing on the radio frequency signal, and then transmit corresponding signals to the two antenna units separately, for example, transmit a signal 1 to the antenna unit 1 and transmit a signal 2 to the antenna unit 2. The signal 1 controls the antenna unit 1 to perform radiation, and the signal 2 controls the antenna unit 2 to perform radiation. When the two antenna units work simultaneously, one of the two antenna units can compensate for radiation of the other antenna unit at a null in a directivity pattern, improving an overall radiation effect.

It may be understood that in design of a distributed antenna, a larger antenna unit count indicates a better overall radiation effect, but a larger antenna unit count also indicates that antennas occupy more space in an electronic device. However, because space that can be used for arrangement of antenna units in all current electronic devices (especially portable electronic devices) is quite limited, distributed design also becomes increasingly difficult to implement. For example, in a mobile phone with a foldable screen, antennas may need to be disposed near different screens due to space constraints. This also increases difficulty of implementing the distributed antenna solution.

It can be learned that by using the foregoing two solutions (for example, the MAS solution and the distributed antenna solution), the problem of poor communication quality resulting from an inherent null in a directivity pattern of an antenna can be resolved to a specific extent. However, due to limitations imposed by factors such as antenna space and costs, quality of communication cannot be significantly improved by using the foregoing solutions.

It should be noted that quality of communication can also be improved by increasing a throughput rate (that is, increasing a quantity of receive signal flows). For example, in a reception process, when antenna units work independently at a same moment, the antenna units can provide signals to a radio frequency module separately through their corresponding radio frequency links (RF chain). A larger quantity of antenna units that work independently at a same moment indicates that the radio frequency module can receive more valid signals, further increasing a throughput rate. The following description is provided with reference to the foregoing solutions. When the MAS solution is used, the electronic device switches from one single antenna to another in essence. In other words, a quantity of antennas that work at a same moment does not change. Therefore, there is no help in increasing a throughput rate. When the distributed antenna solution is used, front ends of a plurality of antennas (for example, the antenna unit 1 and the antenna unit 2 in FIG. 4) that form a distributed antenna correspond to a same radio frequency link. Therefore, it is equivalent to that the antenna unit 1 and the antenna unit 2 form an antenna to work. Therefore, a throughput rate cannot be increased either.

In conclusion, current designs of antennas in an electronic device cannot help provide good quality of wireless communication, because a null in a directivity pattern of an antenna cannot be satisfactorily avoided, and a throughput that can be provided is limited. It should be noted that these problems are even more pronounced when there is a high requirement for space (for example, in an electronic device provided with a foldable screen).

To resolve the foregoing problem, an embodiment of this application provides an antenna switching method. An electronic device may adaptively reconstruct a quantity and/or directivity patterns of antenna units, so that when a communication environment is poor, the electronic device may use an antenna with a larger diameter for radiation, significantly avoiding an impact of a null in a directivity pattern of a fixed antenna on quality of communication, and when a communication environment is good, the electronic device may use more antenna units for radiation, increasing a throughput.

It should be noted that the solutions provided in embodiments of this application can be applied to different electronic devices. For example, the electronic devices may be mobile terminals such as a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, and a personal digital assistant (personal digital assistant, PDA). A specific type of the electronic device is not limited in embodiments of this application. In some implementations, the solutions provided in embodiments of this application can be applied to an electronic device with a foldable screen and help significantly improve quality of communication.

With reference to the accompanying drawings, the following describes in detail the solutions provided in embodiments of this application.

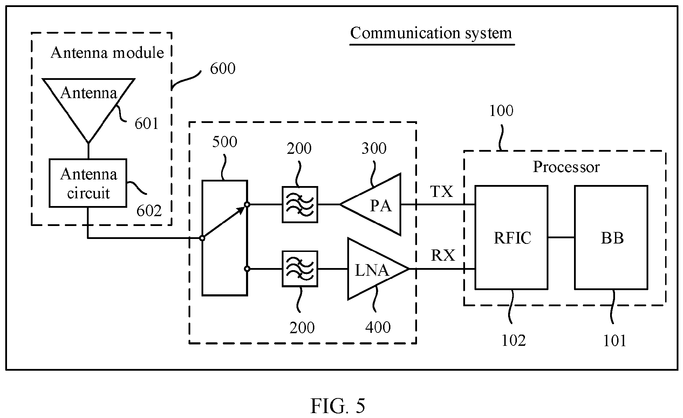

FIG. 5 is a schematic diagram of composition of a communication system (or referred to as a wireless communication system) according to an embodiment of this application. The communication system may be disposed in an electronic device and configured to implement a communication function of the electronic device. As shown in FIG. 1, the communication system may include a processor 100, a filter 200, a low noise amplifier (Low Noise Amplifier, LNA) 300, a power amplifier (Power Amplifier, PA) 400, a switching switch (switch) 500, and an antenna module 600. In some implementations, the antenna module 600 may include one or more antennas (antenna, ANT) 601.

The processor 100 may include one or more processing units. For example, the processor 100 may include an application processor (application processor, AP), a modem processor, a graphics processing unit (graphics processing unit, GPU), an image signal processor (image signal processor, ISP), a neural-network processing unit (neural-network processing unit, NPU), a controller, a video codec, a digital signal processor (digital signal processor, DSP), a baseband, a radio frequency integrated circuit, and/or the like. The controller may generate an operation control signal based on an instruction operation code and a timing signal, to complete control of instruction fetching and execution.

A memory may be disposed in the processor 100, and is configured to store instructions and data. In some embodiments, the memory in the processor 100 includes a cache. The cache may store instructions or data recently used or cyclically used by the processor 100. If the processor 100 needs to use the instructions or the data again, the processor 100 may directly invoke the instructions or the data from the cache. This avoids repeated access and reduces a waiting time of the processor 100, improving efficiency of a system. In some embodiments, a memory may be alternatively disposed outside the processor and coupled to the processor 100.

As shown in FIG. 5, in this example, the processor 100 may include a baseband (Baseband, BB) processor 101 and a radio frequency integrated circuit (Radio Frequency Integrated Circuit, RFIC) 102. In this example, the baseband processor may be referred to as a baseband for short.

For example, the baseband 101 may be configured to synthesize a baseband signal to be transmitted, and/or configured to decode a received baseband signal. Specifically, during transmission, the baseband may encode a speech or another data signal into a baseband signal (baseband code) to be transmitted, and during reception, the baseband may decode a received baseband signal (baseband code) into a speech or another data signal. In some implementations, the baseband 101 may include components such as an encoder, a decoder, and a baseband controller. The encoder is configured to synthesize a baseband signal to be transmitted. The decoder is configured to decode a received baseband signal. The baseband controller may be a microprocessor (Microprocessor or Micro Central Processing Unit, MCU). The baseband controller may be configured to control the encoder and the decoder. For example, the baseband controller may be configured to complete scheduling of encoding and decoding, communication between the encoder and the decoder, peripheral driving (by sending an enable signal to a component outside the baseband to enable the component outside the baseband), and the like.

The radio frequency integrated circuit (Radio Frequency Integrated Circuit, RFIC) 102 is configured to: process a baseband signal to form a transmit (Transmit, TX) signal, and transfer the transmit signal to the power amplifier 400 for amplification; or/and the radio frequency integrated circuit is configured to: process a receive (Receive, RX) signal to form a baseband signal, and send the formed baseband signal to the baseband 101 for decoding. It may be understood that the baseband processor 101 may process digital signals such as a baseband signal, and the radio frequency integrated circuit 102 may be configured to process analog signals such as a radio frequency signal. Between the baseband processor 101 and the radio frequency integrated circuit 102, a digital-to-analog conversion component/an analog-to-digital conversion component may be disposed, and configured to perform digital-to-analog conversion/analog-to-digital conversion when data is transmitted between the baseband processor 101 and the radio frequency integrated circuit 102. Certainly, in some other implementations, the digital-to-analog conversion component/the analog-to-digital conversion component may be alternatively integrated in the baseband processor 101 or the radio frequency integrated circuit 102.

The processor 100 may perform frequency modulation on a signal according to a mobile communication technology or a wireless communication technology. The mobile communication technology may include global system for mobile communications (global system for mobile communications, GSM), general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), an emerging wireless communication technology (which may also be referred to as a 5th generation mobile communication technology, English: 5th generation mobile networks or 5th generation wireless systems, 5th-Generation, and 5th-Generation New Radio, and is referred to as 5G, 5G technology, or 5G NR for short), and the like. The wireless communication technology may include wireless local area network (wireless local area networks, WLAN) (for example, a wireless fidelity (wireless fidelity, Wi-Fi) network), Bluetooth (Bluetooth, BT), global navigation satellite system (global navigation satellite system, GNSS), frequency modulation (frequency modulation, FM), near field communication (near field communication, NFC), infrared (infrared, IR), and the like.

The processor 100 may include at least one baseband 101 and at least one radio frequency integrated circuit 102. In some embodiments, each baseband 101 corresponds to one radio frequency integrated circuit 102, to perform frequency modulation on a signal according to one or more communication technologies. For example, a first baseband and a first radio frequency integrated circuit perform frequency modulation on a signal according to a 5G technology; a second baseband and a second radio frequency integrated circuit perform frequency modulation on a signal according to a 4G technology; a third baseband and a third radio frequency integrated circuit perform frequency modulation on a signal according to the Wi-Fi technology; a fourth baseband and a fourth radio frequency integrated circuit perform frequency modulation on a signal according to the Bluetooth technology; and the like. Alternatively, a first baseband and a first radio frequency integrated circuit may perform frequency modulation on signals according to both a 4G technology and a 5G technology; a second baseband and a second radio frequency integrated circuit perform frequency modulation on a signal according to the Wi-Fi technology; and the like. In some embodiments, alternatively, one baseband 101 may correspond to a plurality of radio frequency integrated circuits 102, to improve integration.

In some embodiments, the baseband 101 and the radio frequency integrated circuit 102 may be integrated in an integrated circuit with other components of the processor 100. In some embodiments, the baseband 101 and the radio frequency integrated circuit 102 may separately be a standalone device independent of the processor 100. In some embodiments, one baseband 101 and one radio frequency integrated circuit 102 may be integrated in a device that is independent of the processor 100. In some embodiments, the baseband 101 and the radio frequency integrated circuit 102 are integrated in different integrated circuits. The baseband 101 and the radio frequency integrated circuit 102 are packaged together, for example, packaged in a system-on-a-chip (system-on-a-chip, SOC).

In the processor 100, different processing units may be standalone devices, or may be integrated in one or more integrated circuits.

The antenna module 600 is configured to transmit a radio frequency signal. The antenna module 600 may be further configured to receive an electromagnetic wave signal, and convert the electromagnetic wave signal into a radio frequency signal. The antenna module 600 may include a plurality of antennas 601 or a plurality of groups of antennas (the plurality of groups of antennas include more than two antennas). Each antenna 601 or the plurality of groups of antennas may be configured to cover a single or a plurality of communication frequency bands. Any one of the plurality of antennas may be a single-band or multi-band antenna. In some implementations, the plurality of antennas may include an array antenna that includes a plurality of antenna elements. In specific implementation, a radiator of any one of the plurality of antennas may include but is not limited to a structure with a conductive property such as a metal bezel of the electronic device, a metal rear housing of the electronic device, and/or a metal component of another device (such as a camera) of the electronic device. The radiator of any one of the plurality of antennas may alternatively include a component in a form such as a flexible printed circuit (Flexible Printed Circuit, FPC) antenna, a stamping (stamping) antenna, and/or a laser-direct-structuring (Laser-Direct-structuring, LDS) antenna. In some implementations, any one of the plurality of antennas may alternatively be an on-chip (on-chip) antenna.

As shown in FIG. 5, the antenna module 600 may further include an antenna circuit 602. The antenna circuit 602 may also be referred to as a matching circuit. The matching circuit may include one or more capacitors, inductors, and/or resistors. The matching circuit may further include an adjustable device, for example, an adjustable inductor and/or an adjustable capacitor. The matching circuit may be configured to tune impedance of the antenna 601. Through tuning performed by the matching circuit, the impedance of the antenna 601 can be enabled to be as close to impedance (for example, 50 ohms or 75 ohms) of a radio frequency signal as possible in a range of an operating frequency band. In this way, when a radio frequency signal is transmitted to the antenna 601, a loss or reflection in a position of an antenna port is reduced, improving radiation efficiency of the communication system.

In this embodiment of this application, the processor 100 and the antenna circuit 600 are coupled to each other, to implement various functions associated with transmission and reception of radio frequency signals. For example, when the electronic device transmits a signal, the baseband 101 may load to-be-transmitted data onto a digital signal in a digital modulation manner, to obtain a baseband signal corresponding to the to-be-transmitted data. The baseband signal is converted into a transmit signal (a radio frequency signal) by the radio frequency integrated circuit 102. The transmit signal is amplified by the power amplifier 400. An amplified output signal output by the power amplifier 400 is transferred to the switching switch 500, passes through the antenna circuit 600, and is transmitted out. A path on which the transmit signal is sent from the processor 100 to the switching switch 500 is a transmit link (or referred to as a transmit path). When the electronic device needs to receive a signal, the antenna circuit 600 sends a receive signal (a radio frequency signal) to the switching switch 500, the switching switch 500 sends the radio frequency signal to the radio frequency integrated circuit 102, the radio frequency integrated circuit 102 processes the radio frequency signal into a baseband signal and sends the baseband signal to the baseband 101, and the baseband 101 converts the processed baseband signal into data and sends the data to a corresponding application processor. A path on which the radio frequency signal is sent from the switching switch 500 to the processor 100 is a receive link (or referred to as a receive path). A port connected to the transmit link in the processor 100 is a transmit port TX, and a port connected to the receive link in the processor 100 is a receive port RX.

The switching switch 500 may be configured to selectively connect the antenna circuit 600 to the transmit link or the receive link electrically. In some embodiments, the switching switch 500 may include a plurality of switches. The switching switch 500 may be further configured to provide an additional function, including signal filtering and/or duplexing (duplexing). As shown in FIG. 5, in some implementations in this embodiment of this application, the TX link corresponding to the switching switch 500 may be further provided with the filter 200 and the PA 300, and the RX link corresponding to the switching switch 500 may be further provided with the filter 200 and the LNA 400. It may be understood that the filter 200, the PA 300, and the LNA 400 may be configured to process a radio frequency signal on a corresponding link, to improve quality of the signal. It should be noted that the composition shown in FIG. 5 is merely an example. In some other implementations of this application, for different operating frequency bands, different TX links and/or RX links may be disposed in a communication system. Composition of components included in each TX link is not limited to composition shown in FIG. 5 either. For example, the PA 300 may not be disposed on some TX links. When a signal on the link needs to be amplified, the signal on the link may be led to a PA 300 on another TX link by a radio frequency cable, to implement time-division/frequency-division sharing of the PA 300. Likewise, composition of components included in each RX link is not limited to composition shown in FIG. 5 either. For example, the LNA 400 may not be included on an RX link corresponding to a frequency band (for example, a roaming frequency band) with a low requirement for signal quality, reducing hardware costs while meeting a requirement for signal quality.

For ease of description, the following uses an example in which the RX link includes the filter 200 and the LNA 400, and the TX link includes the filter 200 and the PA 300. In this embodiment of this application, a collection of the components on the RX link and the components on the TX links included in the communication system may be referred to as a radio frequency module. It may be understood that when the radio frequency module includes a plurality of RX links and/or TX links, an RX link or a TX link may also be referred to as a radio frequency channel. It should be noted that in some implementation scenarios, when an RX link and a TX link are a same physical link, the physical link may also correspond to a radio frequency channel.

In some other embodiments of this application, the communication system of the electronic device may include more or fewer components than those shown in the figure, or combine some components, or split some components, or have different component arrangements. The components shown in the figure may be implemented by hardware, software, or a combination of software and hardware.

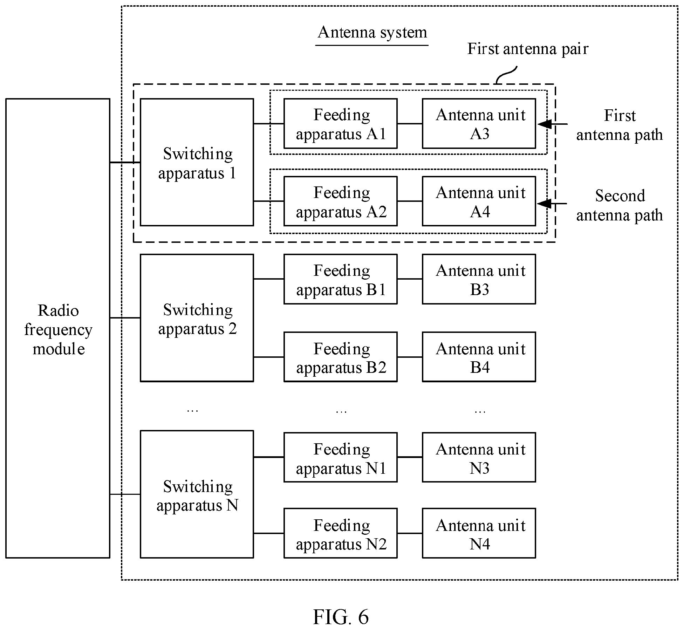

To more clearly describe the composition of the communication system provided in this embodiment of this application, the following illustrates the antenna module 600 shown in FIG. 5 with reference to FIG. 6. FIG. 6 is a schematic diagram of composition of an antenna module 600 (or referred to as an antenna system). As shown in FIG. 6, the antenna system may have an electrical connection relationship with a radio frequency module. In the antenna system, 2×N antennas coupled to the radio frequency module may be disposed, where N is an integer greater than or equal to 2. In the 2N antennas, two antennas covering a same frequency band may constitute an antenna pair. For example, an antenna unit A3 and an antenna unit A4 cover a same frequency band. A first antenna path including the antenna unit A3 and a feeding apparatus A1 may form a first antenna pair with a second antenna path including the antenna unit A4 and a feeding apparatus A2. Likewise, every two of other antenna paths may also constitute an antenna pair. The feeding apparatus may be a radio frequency transmission line (for example, a radio frequency transmission line with impedance controlled to be at 50 ohms), a metal ejector pin, a metal spring plate, or the like, and configured for transmission of an electrical signal to or from an antenna radiator on an antenna path. In some implementations of this application, the feeding apparatus may further include a phase shifter. The phase shifter is configured to adjust a phase of a signal at an antenna port, to control a phase of antenna radiation. For example, by adjusting phase shifters respectively corresponding to two antenna units that work simultaneously, to make a radiation phase difference between the two antenna units be 90 degrees, a dual-polarized radiation effect is achieved, further reducing mutual impacts caused when the two antenna units work simultaneously, and improving signal quality of the system. It should be noted that an antenna path may further include another component. For example, an antenna path may include a matching circuit corresponding to an antenna that is disposed on the antenna path, and/or another radio frequency device configured to implement an antenna radiation function. The matching circuit may tune impedance between an antenna unit and the radio frequency module. The matching circuit may include one or more of a capacitor, an inductor, and a switch. In different states, the matching circuit may adjust one or more of its capacitance, inductance, and switch status, so that impedance of the antenna unit matches impedance of the radio frequency module. In some embodiments, alternatively, an antenna path may not include a feeding apparatus.

It should be noted that the antenna system in FIG. 6 is merely an example of possible composition. For example, in the antenna system, components of an antenna part coupled to a switching apparatus 1 may include the feeding apparatus A1, the antenna unit A3, the feeding apparatus A2, and the antenna unit A4. Likewise, components of an antenna part coupled to a switching apparatus 2 may include two feeding apparatuses and two antenna units. In other words, in the example, N switching apparatuses included in the antenna system may be separately disposed. In some other implementations of this application, alternatively, some or all of the N switching apparatuses (for example, the switching apparatus 1 to a switching apparatus N) may be integrated in a component. With reference to FIG. 5, in some other implementations, one or more of the N switching apparatuses (for example, the switching apparatus 1 to the switching apparatus N) included in the antenna system may be alternatively integrated with the switching switch 500 and disposed in the electronic device.

In addition, with reference to the foregoing description of the radio frequency module, the radio frequency module shown in FIG. 6 may be configured to process a radio frequency signal. For example, the radio frequency module may include at least one of a filter, a combiner, a power amplifier, or a linear amplifier. Specifically, each radio frequency channel may include a component configured to process a radio frequency signal. For example, each radio frequency channel may include at least one of a filter, a combiner, a power amplifier, or a linear amplifier.

In this example, one antenna pair may further correspond to one switching apparatus. The switching apparatus may be disposed between the radio frequency module and antenna paths included in the antenna pair. By controlling the switching apparatus, the electronic device can make the antenna pair work in different states. In different implementations of this application, the switching apparatus may change its switching status based on different control modes. In some implementations, for a switching apparatus controlled by a general-purpose input/output (General-purpose input/output, GPIO) interface, a processor or baseband in the electronic device may adjust a status of an analog control signal on a GPIO control line, to make the switching apparatus work in different working states. For example, the switching apparatus is controlled by two GPIO control lines. The processor or baseband may control analog control signals on the GPIO control lines to work at a high level or a low level. The high level corresponds to 1, and the low level corresponds to 0. In this case, the processor or baseband may control the switching apparatus to work in at least four working states of 01, 10, 00, and 11. In some other implementations, for a switching apparatus controlled by a mobile industry processor interface (Mobile Industry Processor Interface, MIPI), a processor or baseband in the electronic device may control a status (for example, set to 0 or set to 1) of a corresponding bit of a digital control signal transmitted on a MIPI signal line, to make the switching apparatus work in different working states.

It should be noted that control instructions of the switching apparatus in the foregoing example may be stored in an internal storage area of the processor or baseband, and are invoked and delivered to the switching apparatus when a working status of the switching apparatus needs to be adjusted. In some other implementations of this application, the control instructions may be alternatively stored in another component with a storage function in the electronic device. For example, the control instructions may be stored in an internal memory of the electronic device. For another example, the control instructions may be alternatively stored in an external memory of the electronic device. A location in which the control instructions are stored is not limited in this embodiment of this application.

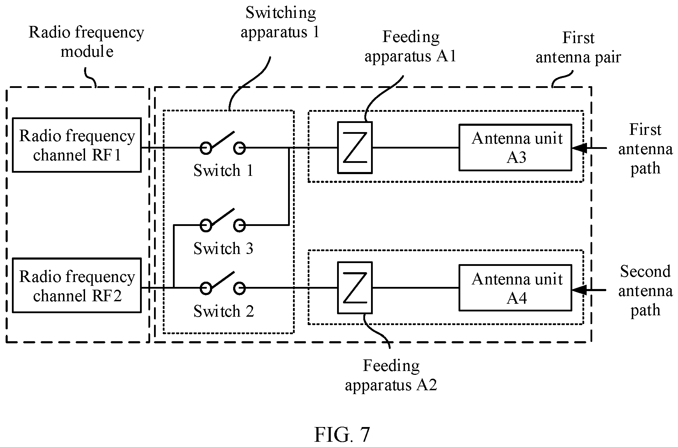

For example, with reference to FIG. 7, how an electronic device controls a switching apparatus to adjust a working status of an antenna pair is described by using the first antenna pair in the antenna system shown in FIG. 6 as an example. In the following embodiment, an example is used for description in which a first radio frequency channel is a radio frequency channel RF2, and a second radio frequency channel is a radio frequency channel RF1.

As shown in FIG. 7, a radio frequency module may include a plurality of radio frequency channels. One radio frequency channel may be configured to support at least one antenna path in implementing reception or transmission of signals in one frequency band. For example, the first antenna path may selectively correspond to the radio frequency channel RF1, and the second antenna path may selectively correspond to the radio frequency channel RF2. In this example, in a case in which the first antenna path corresponds to the radio frequency channel RF1 and the second antenna path corresponds to the radio frequency channel RF2, in a transmission process, when the radio frequency channel RF1 is connected to the first antenna path, the radio frequency channel RF1 may transmit an electrical signal to the antenna unit A3 through the feeding apparatus A1 for radiation in a frequency band 1. In a reception process, a signal in the frequency band 1 received by the antenna unit 3 may be transmitted to the radio frequency channel RF 1 through the feeding apparatus A1, so that the radio frequency channel RF 1 can parse the signal, to implement reception of the signal. Likewise, in a transmission process, when the radio frequency channel RF2 is connected to the second antenna path, the radio frequency channel RF2 may transmit an electrical signal to the antenna unit A4 through the feeding apparatus A2 for radiation in the frequency band 1. In a reception process, a signal in the frequency band 1 received by the antenna unit A4 may be transmitted to the radio frequency channel RF2 through the feeding apparatus A2, so that the radio frequency channel RF2 can parse the signal, to implement reception of the signal.

In FIG. 7, an example is used in which the switching apparatus 1 includes three single-pole single-throw (single-pole single-throw, SPST) switches, for example, a switch 1, a switch 2, and a switch 3. One end of the switch 1 is coupled to the radio frequency channel RF1, and the other end of the switch 1 is coupled to the feeding apparatus A1. One end of the switch 2 is coupled to the radio frequency channel RF2, and the other end of the switch 2 is coupled to the feeding apparatus A2. One end of the switch 3 is coupled to the radio frequency channel RF2, and the other end of the switch 3 is coupled to the feeding apparatus A1. It should be noted that in the description of this example, an example is used in which each switching apparatus implements its switching function by using three SPSTs. In some other implementations, a switching apparatus may alternatively implement its switching function by using another component. For example, the switching apparatus may include one SPST and one 2SPST to implement its switching function.

In this example, by controlling the switching apparatus 1 that includes the three SPSTs, the electronic device can control the first antenna pair to work in different working states. The following uses examples to describe working mechanisms of working states of the first antenna pair in a transmission scenario.

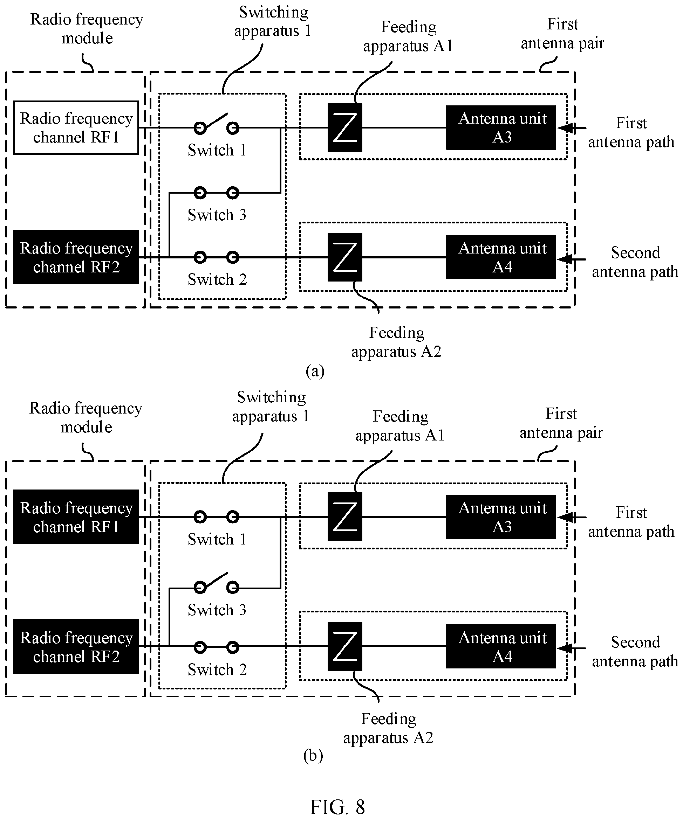

State 1: Refer to (a) in FIG. 8. The electronic device may control the switch 1 in the switching apparatus 1 to turn off and the switch 2 and the switch 3 in the switching apparatus 1 to turn on. In this state, the radio frequency module may simultaneously transmit an electrical signal to the antenna unit A3 and the antenna unit A4 through the radio frequency channel RF2 for radiation. In this case, the antenna unit A3 and the antenna unit A4 are combined into an antenna and perform radiation. In the state 1, a transmit signal (for example, referred to as a transmit signal 1) is routed to the second antenna path after passing through the radio frequency channel RF2 and the switch 2, and the transmit signal 1 is routed to the first antenna path after passing through the radio frequency channel RF2 and the switch 3. In this way, a single transmit signal (that is, the transmit signal 1) is radiated by two antenna units (the antenna unit A3 and the antenna unit A4). Because the antenna unit A3 and the antenna unit A4 work simultaneously, directivity patterns of the two antenna units are superimposed in space, forming a directivity pattern corresponding to a current working state (for example, the state 1). A null in the directivity pattern differs from the antenna unit A3 or the antenna unit A4, avoiding a problem of communication quality deterioration resulting from the null in the directivity pattern of the antenna unit A3 or the null in the directivity pattern of the antenna unit A4.

State 2: Refer to (b) in FIG. 8. The electronic device may control the switch 1 and the switch 2 in the switching apparatus 1 to turn on and the switch 3 in the switching apparatus 1 to turn off. In this state, the radio frequency module may transmit a transmit signal to the antenna unit A3 through the radio frequency channel RF1 for radiation, and the radio frequency module may also transmit a transmit signal to the antenna unit A4 through the radio frequency channel RF2 for radiation. In the state 2, the transmit signal (a transmit signal 2) from the radio frequency channel RF1 may be transmitted to the first antenna path through the switch 1 and radiated by the antenna unit A3. Likewise, the transmit signal (a transmit signal 3) from the radio frequency channel RF2 may be transmitted to the second antenna path through the switch 2 and radiated by the antenna unit A4. In this state, radio frequency signals (for example, the transmit signal 2 and the transmit signal 3) transmitted by the radio frequency channel RF1 and the radio frequency channel RF2 to the antenna system may be the same. In other words, in the transmission scenario, the radio frequency module may simultaneously use two antenna paths to transmit corresponding signals. Therefore, when this state is compared with a state in which only one antenna path is used for transmission, a throughput rate of the system can be significantly increased.

In some embodiments, the transmit signal 2 and the transmit signal 3 may be two different transmit signals in a MIMO scenario; or in some embodiments, the transmit signal 2 and the transmit signal 3 may be two different transmit signals in a dual-connectivity scenario; or in some other embodiments, the transmit signal 2 and the transmit signal 3 may be signals that are in different frequency bands and that are simultaneously transmitted in a carrier aggregation (Carrier Aggregation, CA) scenario; or the like.

It may be understood that in the transmission scenario, a transmit signal is transmitted from the radio frequency module to a corresponding antenna path in the antenna system for radiation; and in the reception scenario, an antenna unit on an antenna path receives an electromagnetic wave (a receive signal) in a corresponding frequency band in space, converts the electromagnetic wave into an analog signal, and transmits the analog signal to the radio frequency module for parsing. It can be learned that flow directions of signals in transmission and reception processes are opposite. Therefore, when the switching apparatus is in different working states, the switching apparatus can also achieve corresponding effects. The reception scenario is used as an example. For example, in the state 1, because two antenna units (for example, the antenna unit A3 and the antenna unit A4) work simultaneously, the two antenna units receive electromagnetic waves in an operating frequency band, convert the electromagnetic waves into analog signals, and transmit the analog signals to the radio frequency channel RF2 for parsing. Therefore, when the state 1 is compared with a state in which only one antenna unit works, the antenna system can collect electromagnetic waves from more directions, so that the radio frequency module can obtain a more complete signal for parsing, improving accuracy of signal parsing. For another example, in the state 2, because the antenna unit A3 and the antenna unit A4 work simultaneously, the antenna unit A3 and the antenna unit A4 receive electromagnetic waves in an operating frequency band, convert the electromagnetic waves into analog signals, and separately transmit the analog signals to the radio frequency channel RF1 and the radio frequency channel RF2 for parsing. Therefore, the radio frequency module can simultaneously receive two signals for parsing, increasing the throughput rate of the system, and also improving accuracy of parsing by comparing analog parameters of the two signals. For ease of description, in all the following embodiments, an implementation process of the solutions in this application is described by using the transmission scenario as an example. Beneficial effects in the reception scenario correspond to beneficial effects in the transmission scenario. Details are not described again.

In this embodiment of this application, the electronic device may flexibly adjust working statuses of antennas based on a preset condition and different requirements for communication in a current environment, so that the antenna system can adaptively provide a corresponding high-quality communication service in the current environment in a corresponding working state.

It may be understood that with a logical connection shown in FIG. 7, the electronic device may further control the first antenna pair to be in other working states.

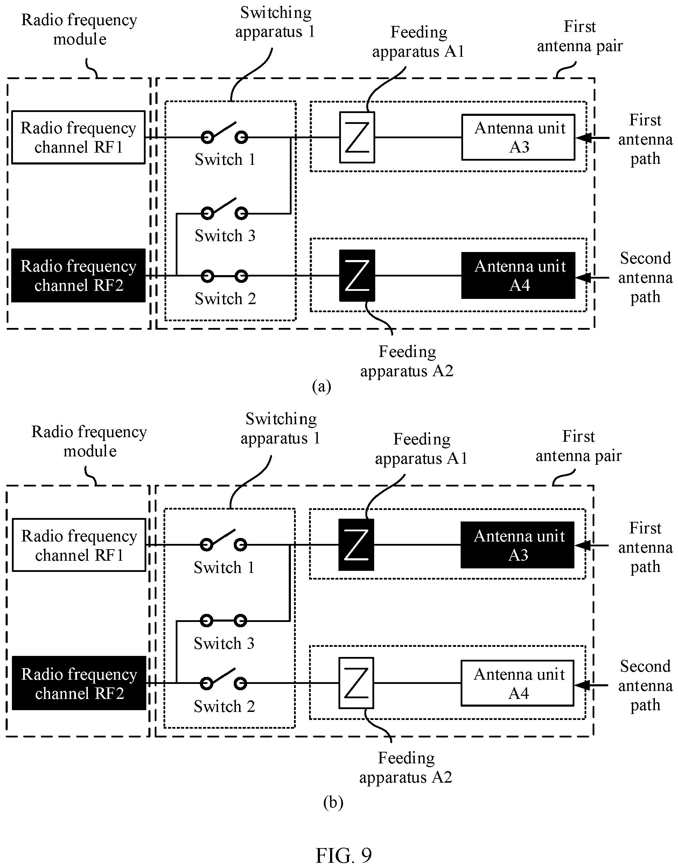

State 3: Refer to (a) in FIG. 9. The electronic device may control the switch 1 and the switch 3 in the switching apparatus 1 to turn off and the switch 2 in the switching apparatus 1 to turn on. In this case, the second antenna path works alone. The radio frequency module may transmit an electrical signal to the antenna unit A4 through the radio frequency channel RF2 for radiation.

State 4: Refer to (b) in FIG. 9. The electronic device may control the switch 1 and the switch 2 in the switching apparatus 1 to turn off and the switch 3 in the switching apparatus 1 to turn on. In this case, the first antenna path works alone. The radio frequency module may transmit an electrical signal to the antenna unit A3 through the radio frequency channel RF1 for radiation.

When using the antenna unit A4 for radiation (that is, when the first antenna pair works in the state 3), the electronic device can learn based on current quality of communication whether current radiation is near the null in the directivity pattern of the antenna unit A4. If the current radiation is near the null in the directivity pattern of the antenna unit A4, the electronic device may control the antenna unit A3 in the first antenna pair to perform radiation (that is, switch a working status to the state 4), avoiding a problem of communication quality deterioration resulting from the null in the directivity pattern of the antenna unit A3. Likewise, when a direction of arrival is near the null in the directivity pattern of the antenna unit A4, the electronic device may switch the working status of the first antenna pair from the state 4 to another state, for example, the state 3 or the state 1. In this way, the directivity pattern of the first antenna pair in the current working state is changed, avoiding a problem of communication quality deterioration resulting from the null in the directivity pattern.

The antenna unit A3 and the antenna unit A4 may be located in different positions in the electronic device. In the foregoing description, the first antenna pair is described in detail. It is easily understood that for other antenna pairs shown in FIG. 6, the electronic device may control, by using a similar method, the antenna pairs to work in different working states, to avoid an impact of a null in a directivity pattern of a fixed antenna on quality of communication. In addition, a throughput rate is increased when needed by adjusting a working status of an antenna pair. In this way, overall communication quality of the electronic device can be significantly improved.

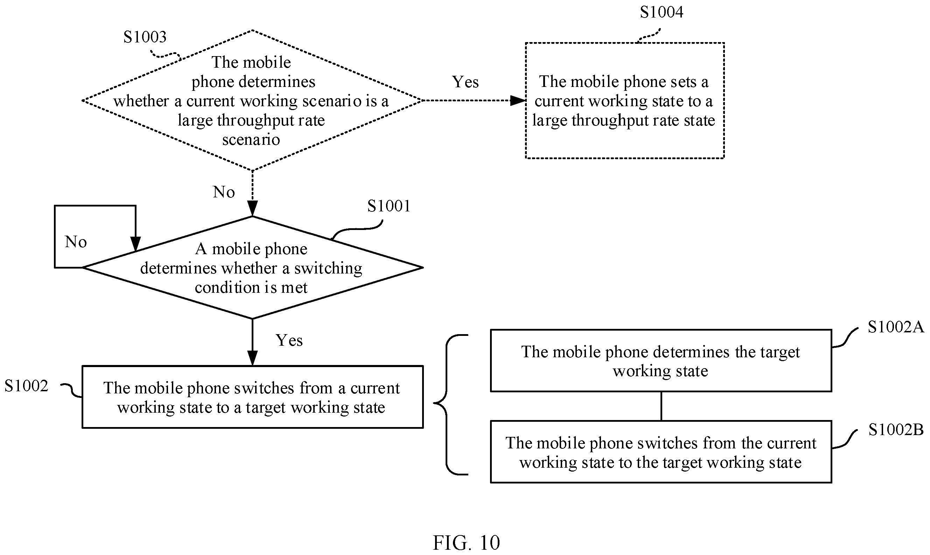

Based on the foregoing descriptions of FIG. 6 to FIG. 9, an embodiment of this application further provides an antenna switching method. The method can be applied to an electronic device. Refer to FIG. 10. An example is used for description in which the electronic device is a mobile phone. The method may include the following steps.

S1001: The mobile phone determines whether a switching condition is met.

For example, after being turned on, the mobile phone may obtain a communication parameter in a current communication process in real time, to determine, based on the communication parameter and a corresponding preset threshold, whether a working status of an antenna needs to be switched. For example, the communication parameter may include a reference signal received power (Reference Signal Receiving Power, RSRP), a received signal strength indicator (Received Signal Strength Indication, RSSI), and the like. An example is used in which the communication parameter includes the RSRP. The mobile phone may determine a relationship between an RSRP in current communication and a corresponding preset RSRP threshold in real time. When the RSRP in current communication is greater than the corresponding preset RSRP threshold, the mobile phone may determine that a current working state of the antenna can meet a communication requirement. Therefore, the switching condition is not met, and the working status of the antenna does not need to be switched. When the RSRP in current communication is less than the corresponding preset RSRP threshold, the mobile phone may determine that a current working state of the antenna cannot provide good communication quality. Therefore, the switching condition is met, and the working status of the antenna needs to be switched.

In some other implementations of this example, the communication parameter may alternatively be a bit error rate. The mobile phone may determine, based on a relationship between a bit error rate in the current communication process and a preset bit error rate threshold, whether the switching condition is met. For example, when the bit error rate in current communication is greater than the preset bit error rate threshold, it is considered that the switching condition is met. When the bit error rate in current communication is less than the preset bit error rate threshold, it is considered that switching is not required. Certainly, in some other implementations of this application, the communication parameter may alternatively include both the bit error rate and the RSRP, so that the mobile phone comprehensively determines a status of current communication and performs more accurate determining. For example, only when a bit error rate is greater than a bit error rate threshold and an RSRP is greater than an RSRP threshold, the mobile phone determines that the switching condition is met.

It should be noted that in the foregoing example, the description is provided by using an example in which the mobile phone monitors the communication parameter in real time. In some other implementations of this application, the mobile phone may altenatively monitor the communication parameter by performing sampling at preset time intervals. In this way, power consumption caused by monitoring of the communication parameter can be appropriately reduced, while whether the switching condition is met is determined in a timely manner.

When determining that the switching condition is not met, the mobile phone may repeat S1001. When determining that the switching condition is met, the mobile phone may perform S 1002 below.

S1002: The mobile phone switches from a current working state to a target working state.

It may be understood that before the mobile phone is delivered, a plurality of groups of switch states may be preconfigured in the mobile phone. For example, the plurality of groups of switch states may include the states shown in FIG. 8 and/or FIG. 9. In this example, the mobile phone may determine a working state to be switched to, that is, a target switching state, by using a plurality of solutions. For example, with reference to FIG. 10, S1002 may include S 1002A and S 1002B.

S1002A: The mobile phone determines the target working state.

S1002B: The mobile phone switches from the current working state to the target working state.

For example, in some implementations, when determining that the switching condition is met, the mobile phone may directly switch from the current working state to a preset first working state. For example, if the current working state is the state indicated by (a) in FIG. 9, the mobile phone may directly switch from the current working state of an antenna system to the state indicated by (b) in FIG. 9 when determining that the switching condition is met. After switching to the state shown in (b) in FIG. 9, the mobile phone may perform S1001 above cyclically. If the switching condition is still met, the mobile phone may switch from the current state to the state shown in (a) in FIG. 8. Likewise, if the current working state is another state, the mobile phone may switch to, based on preset priorities, a working state in preconfigured working states that differs from the current working state and has a higher priority. In this way, the working status of the antenna is switched.

In some other implementations, when determining that the switching condition is met, the mobile phone may control the antenna system to work in each preset switch state, and monitor a value of the communication parameter (for example, the RSRP) in different switch states (in this example, the method may also be referred to as polling preset switch states). In this way, the mobile phone can obtain working effects of the switch states in a current communication environment. In this example, the mobile phone may determine, as the target working state, a working state of the antenna that corresponds to a switch state corresponding to a largest RSRP. The mobile phone may determine, by searching a table, a control signal of switch logic corresponding to the target working state. In this way, the mobile phone can switch from the current working state to the target working state based on the control signal. It should be noted that by using the foregoing solution, the mobile phone can determine a working state with a best working effect in the current communication environment as the target working state, and further control the antenna system to switch to the target working state. In some other examples, alternatively, the mobile phone may control the antenna system to work in each different preset switch state; obtain a corresponding RSRP; when an RSRP is greater than the preset RSRP threshold, stop polling the preset switch states; and use, as the target working state, a working state that corresponds to a switch state in which a current RSRP is greater than the preset RSRP threshold. Further, the mobile phone may determine, by searching a table, a control signal of switch logic corresponding to the target working state. In this way, the mobile phone can switch from the current working state to the target working state based on the control signal.

Based on the foregoing description of S1001 and S1002, it should be understood that obtaining and determining of the communication parameter change with a communication environment in which the mobile phone is. In other words, determining and switching of the working status adaptively change with a communication environment in which the mobile phone is. In this way, the mobile phone can switch the working status of the antenna to an optimal state with reference to a current communication environment, to provide better communication quality. It is easily understood that because switching between different working states causes a change in a directivity pattern of the antenna system, a problem of poor communication quality resulting from a null in the directivity pattern can be resolved by switching the working status of the antenna to change the directivity pattern of the antenna system, and further, an impact caused by the null in the directivity pattern on quality of communication can be avoided.

It should be noted that in some other implementations of this application, the mobile phone may further flexibly adjust the working status of the antenna based on a requirement for a throughput rate in a current scenario. For example, before performing S1001, the mobile phone may perform S1003 and S1004 shown in FIG. 10.

S1003: The mobile phone determines whether a current working scenario is a large throughput rate scenario.

The large throughput rate scenario may be preset in the mobile phone. For example, when determining that a current uplink or downlink throughput rate is greater than a preset throughput rate threshold, the mobile phone determines that the current working scenario is the large throughput rate scenario. For another example, when determining that the mobile phone is currently in a video call scenario, the mobile phone determines that the current working scenario is the large throughput rate scenario.

After determining that the current working scenario is the large throughput rate scenario, the mobile phone may perform S1004 below. If determining that the current working scenario is not the large throughput rate scenario, the mobile phone may perform S1001 shown in FIG. 10.

In some embodiments, the large throughput rate scenario may be a scenario requiring a large throughput or a scenario requiring a low delay, for example, a scenario such as a video call, live streaming, autonomous driving, or mobile medicine.

S1004: The mobile phone sets a current working state to a large throughput rate state.

When determining that there is a requirement for increasing a throughput rate, the mobile phone may control the working status of the antenna to be the corresponding large throughput rate state. For example, with reference to FIG. 8, the mobile phone may set one or more antenna pairs in the antenna system of the mobile phone to be in the working state shown in (b) in FIG. 8, to implement dual-channel reception and transmission and further increase a throughput rate.

Based on the solution shown in FIG. 10, a person skilled in the art should easily understand specific operation steps in this embodiment of this application. By using the foregoing solution, the electronic device can adaptively adjust the working status of the antenna based on a requirement of a current communication environment, reconstructing a quantity and/or directivity patterns of antennas, and improving quality of communication.

To describe in more detail the solution shown in this embodiment of this application, the following illustrates the solution by using an example in which the electronic device is an electronic device with a foldable screen.

The foldable screen (which may also be referred to as a foldable device) disposed in the electronic device may be folded into at least two screens. For example, the foldable screen may be folded into a first screen and a second screen. It should be noted that the at least two screens formed after the foldable screen is folded may be a plurality of screens that exist independently, or may be a complete screen that is of an integrated structure and is just folded into at least two parts.

In a process in which the foldable screen is folded, a parameter of the foldable screen changes. For example, an included angle between the first screen and the second screen changes, and a folding speed, a folding direction, folding acceleration, and the like that are of a folded screen also change. The folded screen may be a screen that rotates when a user performs a folding operation and that is one of the first screen and the second screen.

In conclusion, in this embodiment of this application, changes in the parameters such as the included angle between the first screen and the second screen that is formed when the fordable screen is folded, and a folding speed, folding acceleration, and a folding direction that are of a folded screen may be made correspond to different settings of working antennas in the electronic device, so that the electronic device can use different combinations of antennas in different forms for working, thereby adaptively adjusting the working antennas based on a form of the electronic device, further reconstructing a quantity and/or directivity patterns of antennas in different forms, and improving performance of wireless communication.

For example, in some embodiments of this application, the foldable screen may be a flexible foldable screen. The flexible foldable screen includes a foldable edge made of a flexible material. Part or all of the flexible foldable screen is made of a flexible material. For example, in the flexible foldable screen, only a foldable part (for example, the foldable edge) is made of a flexible material, and other parts are made of a rigid material; or the flexible foldable screen is all made of a flexible material. The foldable screen may be folded into a plurality of (two or more) screens along the foldable edge.

For example, a foldable screen shown in (a) in FIG. 11 is a flexible foldable screen. The foldable screen shown in (a) in FIG. 11 is a complete screen. The screen includes a foldable edge made of a flexible material. After the foldable screen is folded along the foldable edge, a screen A 1101 and a screen B 1102 shown in (b) in FIG. 11 may be formed.

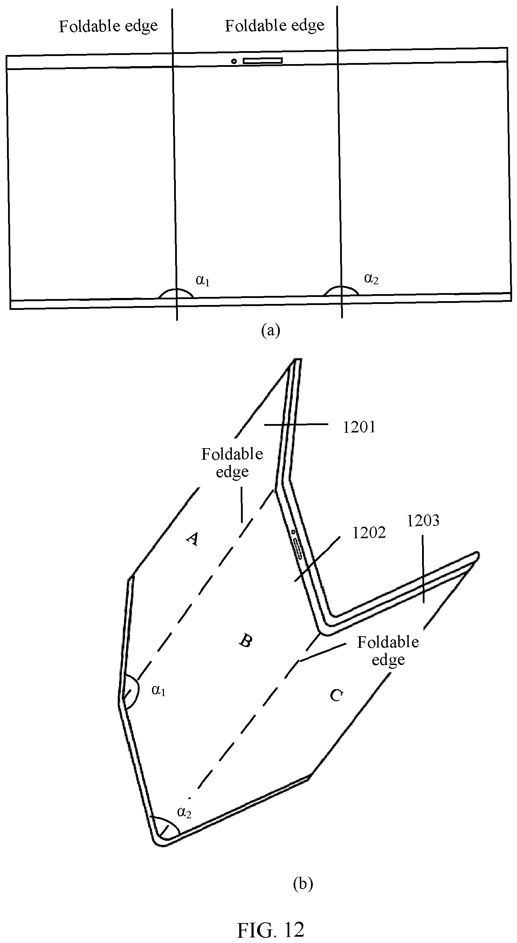

For another example, a foldable screen shown in (a) in FIG. 12 is also a flexible foldable screen. The foldable screen shown in (a) in FIG. 12 is a complete screen. The screen includes foldable edges made of a flexible material. After the foldable screen is folded along the foldable edges, a screen A 1201, a screen B 1202, and a screen C 1203 shown in (b) in FIG. 12 may be formed.
(a) in FIG. 11 and (a) in FIG. 12 are both schematic diagrams of forms of the foldable screens when unfolded (in other words, the foldable screens are in an unfolded state). (b) in FIG. 11 and (b) in FIG. 12 are both schematic diagrams of forms of the foldable screens in a semi-folded state, (c) in FIG. 11 is a schematic diagram of a form of the foldable screen in a closed state. It should be noted that in embodiments of this application, a status of a foldable screen includes the unfolded state, the closed state, and the semi-folded state. The unfolded state indicates that the foldable screen is unfolded. That is, an included angle between any two screens of the foldable screen is 180°. The closed state indicates that the foldable screen is completely folded. That is, an included angle between any two screens of the foldable screen is 0°. A state between the unfolded state and the closed state is the semi-folded state.

In some other embodiments of this application, the foldable screen may be a multi-screen foldable screen. The multi-screen foldable screen may include a plurality of (two or more) screens. It should be noted that the plurality of screens are a plurality of separate screens. The plurality of screens may be connected sequentially by using a fold axis. Each screen may rotate around a fold axis connected to the screen, implementing folding of the multi-screen foldable screen.

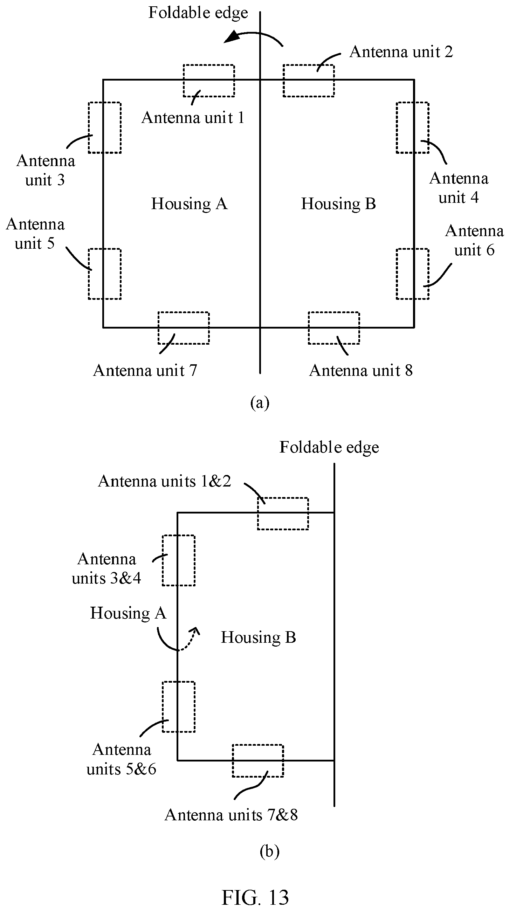

In some implementations of this application, the multi-screen foldable screen includes two separate screens, for example, respectively referred to as a screen A and a screen B. The screen A and the screen B are connected by using a fold axis. The screen A and the screen B may rotate around the fold axis, implementing folding of the multi-screen foldable screen. The multi-screen foldable screen may alternatively include three or more screens. For a specific form and a folding manner of the multi-screen foldable screen, refer to FIG. 13 and the related description. Details are not described herein again.

When the foldable screen is in the closed state, an included angle between adjacent screens is 0°. For example, an included angle α between the screen A and the screen B shown in (c) in FIG. 11 is 0°. When the foldable screen is in the unfolded state, an included angle between adjacent screens is 180°. For example, an included angle α between the screen A and the screen B shown in (a) in FIG. 11 is 180°. When the foldable screen is in the semi-folded state, a value range of an included angle between adjacent screens may be (0°, 180°). For example, an included angle α between the screen A 1101 and the screen B 1102 shown in (b) in FIG. 11 belongs to (0°, 180°).

In FIG. 11 and FIG. 12 above, the foldable screen of the electronic device is folded vertically to implement folding of the foldable screen. Certainly, the foldable screen of the electronic device may also be folded horizontally to implement folding of the foldable screen.

In addition, FIG. 11 and FIG. 12 above are schematic diagrams of a case in which a value range of an included angle between adjacent screens of a foldable screen is [0°, 180°]. Certainly, the value range of the included angle betweenadjacent screens of the foldable screen may further include (180°, 360°]. For example, a foldable screen shown in FIG. 11 is used as an example. After the foldable screen shown in (a) in FIG. 11 is folded along a foldable edge, a screen A and a screen B may be formed. It should be noted that in this embodiment of this application, when an included angle between any two screens of a foldable screen is 360°, it may also be considered that the foldable screen is in the closed state.

For example, a foldable device is a mobile phone provided with a foldable screen. On each of a housing (for example, referred to as a housing A) corresponding to a screen A of the mobile phone and a housing (for example, referred to as a housing B) corresponding to a screen B of the mobile phone, a plurality of antennas may be disposed. For example, as shown in (a) in FIG. 13, an antenna unit 1, an antenna unit 3, an antenna unit 5, and an antenna unit 7 may be disposed on the housing A, and an antenna unit 2, an antenna unit 4, an antenna unit 6, and an antenna unit 8 may be disposed on the housing B. In this example, positions of the antenna unit 1 and the antenna unit 2 may be provided symmetrically relative to a foldable edge. Likewise, positions of the antenna unit 3 and the antenna unit 4 may be provided symmetrically relative to the foldable edge, positions of the antenna unit 5 and the antenna unit 6 may be provided symmetrically relative to the foldable edge, and positions of the antenna unit 7 and the antenna unit 8 may be provided symmetrically relative to the foldable edge. As shown in the figure, with reference to (b) in FIG. 13, when the mobile phone is in a closed state, projected areas of the antenna unit 1 and the antenna unit 2 on the screen may be the same or approximately the same. Likewise, projected areas of the antenna unit 3 and the antenna unit 4 on the screen may be the same or approximately the same, projected areas of the antenna unit 5 and the antenna unit 6 on the screen may be the same or approximately the same, and projected areas of the antenna unit 7 and the antenna unit 8 on the screen may be the same or approximately the same.

The antenna unit 1 and the antenna unit 2 may constitute an antenna pair, the antenna unit 3 and the antenna unit 4 may constitute an antenna pair, the antenna unit 5 and the antenna unit 6 may constitute an antenna pair, and the antenna unit 7 and the antenna unit 8 may constitute an antenna pair.

With reference to the foregoing descriptions of FIG. 6 to FIG. 10, when the antenna switching method according to this embodiment of this application is applied to the mobile phone shown in FIG. 13, the mobile phone may control each antenna pair in an antenna system including the antenna unit 1 to the antenna unit 8 to switch between at least four states.

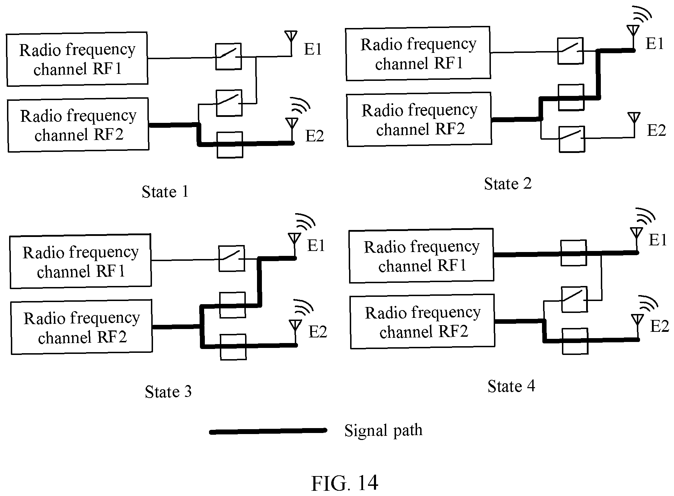

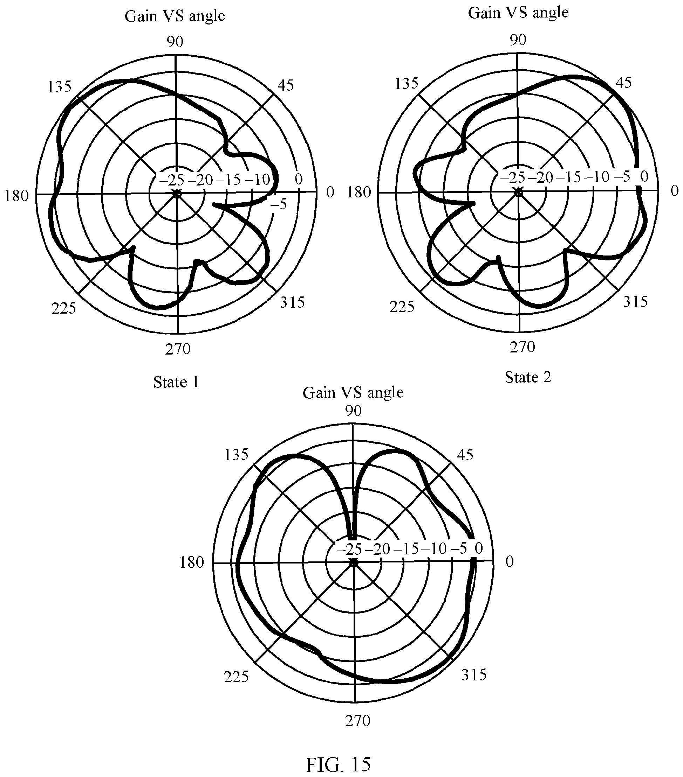

For example, the antenna pair including the antenna unit 1 (for example, referred to as E1) and the antenna unit 2 (for example, referred to as E2) is used as an example. Four states of the antenna pair are shown in FIG. 14. In a state 1, a radio frequency channel RF1 is connected to E2, and the mobile phone performs signal reception and transmission by using E2. In a state 2, the radio frequency channel RF2 is connected to E1, and the mobile phone performs signal reception and transmission by using E1. It can be learned that after a switchover from the state 1 to the state 2 (or a switchover from the state 2 to the state 1) is performed, a directivity pattern of the antenna pair is reconstructed when directivity patterns of E1 and E2 are different, because a working antenna changes. In a state 3, the radio frequency channel 2 is connected to both E1 and E2, and the mobile phone performs signal reception and transmission by using both E1 andE2. It may be understood that in the state 3, because E1 and E2 work simultaneously, a directivity pattern of the antenna pair may be considered as a result obtained after the directivity patterns of E1 and E2 are superimposed. FIG. 15 shows distribution of the directivity patterns in the state 1, the state 2, and the state 3. Obviously, distribution of the result of directivity pattern superimposition in the state 3 is different from both distribution of the directivity pattern existing when only E2 works in the state 1 and distribution of the directivity pattern existing when only E1 works in the state 2. In other words, a null in the directivity pattern in the state 3 is different from a null in the directivity pattern in the state 1 or a null in the directivity pattern in the state 2. Therefore, the mobile phone can avoid an impact of a null in a directivity pattern in a current communication state on quality of communication by switching between the three states. Still with reference to FIG. 14, the antenna pair may further have a working state indicated by a state 4. In the state 4, a radio frequency channel RF1 performs signal reception and transmission by using E1, and the radio frequency channel RF2 performs signal reception and transmission by using E2. Therefore, when signals received and transmitted by the two channels are in a same frequency band, simultaneous dual-channel reception and transmission is implemented, increasing a throughput rate.

It should be noted that to achieve a directivity pattern distribution effect shown in FIG. 15, two antenna units in a same antenna pair are disposed at positions that are symmetrical relative to the foldable edge, as in the description of FIG. 13 and FIG. 14. In this way, when the two antennas work simultaneously, a mutual impact between the two antennas can be reduced, achieving an optimal communication effect.

With reference to the method shown in FIG. 10, the mobile phone may determine a working status of a corresponding antenna based on an electrical parameter in current communication. In this example, because the solution is applied to the mobile phone with a foldable screen, the antenna system is obviously in different communication environments when the mobile phone is in different folded states (for example, an unfolded state and the closed state). Therefore, in some implementations of this application, the mobile phone may further determine and adjust a working status of an antenna based on a current folded state. For example, when the mobile phone is in the unfolded state, the antenna system may be controlled to work in the state 4, so that the mobile phone can provide a larger throughput rate for communication. For another example, when the mobile phone is in the closed state, the antenna system may be controlled to work in the state 3, so that the mobile phone can improve quality of communication by avoiding the null in the directivity pattern.

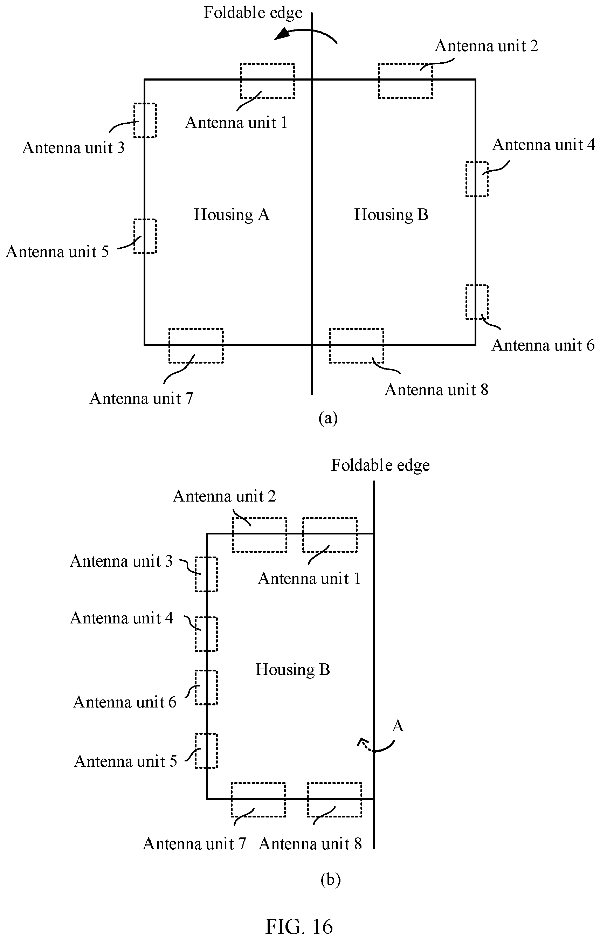

In some other implementations of this application, two antenna units in a same antenna pair may be alternatively disposed at asymmetrical positions. For example, with reference to FIG. 16, an example is still used in which a mobile phone is provided with eight antenna units. In an example in FIG. 16, as shown in (a) in FIG. 16, an antenna unit 1, an antenna unit 3, an antenna unit 5, and an antenna unit 7 are disposed on a housing A, and an antenna unit 2, an antenna unit 4, an antenna unit 6, and an antenna unit 8 are disposed on a housing B. When the mobile phone is in a closed state, projections of the antenna units in the mobile phone on a screen are staggered. For example, with reference to (b) in FIG. 16, the projections of the antenna unit 1 and the antenna unit 2 are located in an upper part of the mobile phone that is in the closed state, and the projections of the antenna unit 1 and the antenna unit 2 do not overlap each other. Likewise, the projections of the antenna unit 3 and the antenna unit 4 are located on a side of the mobile phone that is in the closed state, the projections of the antenna unit 3 and the antenna unit 4 are located in the upper part of the mobile phone that is in the closed state, the projections of the antenna unit 5 and the antenna unit 6 are located on the side of the mobile phone that is in the closed state, the projections of the antenna unit 5 and the antenna unit 6 are located in the upper part of the mobile phone that is in the closed state, the projections of the antenna unit 7 and the antenna unit 8 are located on the side of the mobile phone that is in the closed state, and the projections of the antenna unit 7 and the antenna unit 8 are located in a lower part of the mobile phone that is in the closed state.

In this example, two antennas may also form an antenna pair. For example, the antenna unit 1 and the antenna unit 2 may constitute an antenna pair, the antenna unit 3 and the antenna unit 4 may constitute an antenna pair, the antenna unit 5 and the antenna unit 6 may constitute an antenna pair, and the antenna unit 7 and the antenna unit 8 may constitute an antenna pair.

It should be noted that in this example, a radio frequency module may provide a maximum of six multi input multi output (Multi Input Multi Output, MIMO) ports, to implement multi input multi output communication. When only the antenna unit 1 (for example, E1) works, the antenna unit 1 may be used as a main antenna (Main) and coupled to a corresponding radio frequency channel, to implement a working effect of the main antenna. When only the antenna unit 2 (for example, E2) works, the antenna unit 2 may be coupled to a radio frequency channel corresponding to a MIMO 3, to implement a working effect of a frequency band corresponding to the MIMO 3. When only the antenna unit 3 (for example, E3) works, the antenna unit 3 may be coupled to a radio frequency channel corresponding to a diversity (Div), to implement a working effect of a frequency band corresponding to Div. When only the antenna unit 4 (for example, E4) works, the antenna unit 4 may be coupled to a radio frequency channel corresponding to a MIMO 4, to implement a working effect of a frequency band corresponding to the MIMO 4. When only the antenna unit 5 (for example, E5) works, the antenna unit 5 may be coupled to a radio frequency channel corresponding to a MIMO 1, to implement a working effect of a frequency band corresponding to the MIMO 1. When only the antenna unit 6 (for example, E6) works, the antenna unit 6 may be coupled to a radio frequency channel corresponding to a MIMO 5, to implement a working effect of a frequency band corresponding to the MIMO 5. When only the antenna unit 7 (for example, E7) works, the antenna unit 7 may be coupled to a radio frequency channel corresponding to a MIMO 2, to implement a working effect of a frequency band corresponding to the MIMO 2. When only the antenna unit 8 (for example, E8) works, the antenna unit 8 may be coupled to a radio frequency channel corresponding to a MIMO 6, to implement a working effect of a frequency band corresponding to the MIMO 6.

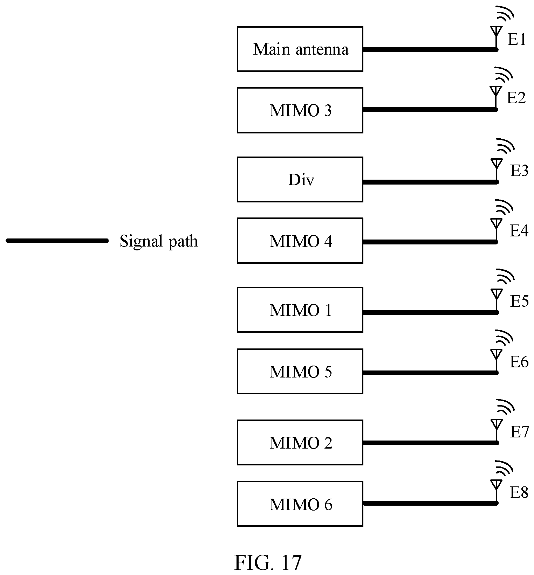

With reference to the foregoing description of the solution, the mobile phone shown in FIG. 16 may provide a plurality of different working states, to meet requirements in various different communication environments. For example, the mobile phone may control the antenna units to be separately connected to the corresponding radio frequency channels, to implement normal operation of a single channel corresponding to a single antenna. For example, with reference to FIG. 17, E1 is coupled to the radio frequency channel corresponding to Main, and performs radiation as the main antenna. E2 is coupled to the MIMO 3 and performs radiation in the frequency band corresponding to the MIMO 3. E3 is coupled to Div and performs radiation as the diversity. E4 is coupled to the MIMO 4 and performs radiation in the frequency band corresponding to the MIMO 4. E5 is coupled to the MIMO 1 and performs radiation in the frequency band corresponding to the MIMO 1. E6 is coupled to the MIMO 5 and performs radiation in the frequency band corresponding to the MIMO 5. E7 is coupled to the MIMO 2 and performs radiation in the frequency band corresponding to the MIMO 2. E8 is coupled to the MIMO 6 and performs radiation in the frequency band corresponding to the MIMO 6. It can be learned that in this example, the eight antenna units are separately coupled to different radio frequency channels. Therefore, a multi input multi output mechanism with a maximum of 8×8 MIMO can be provided.

In addition to the foregoing working states, the mobile phone may further control antenna paths corresponding to E1 to E8 for reconstruction of a quantity and/or a directivity pattern, to provide better communication quality.

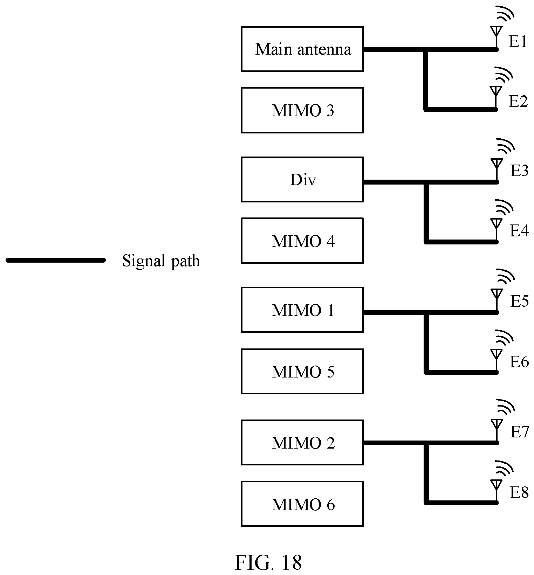

The mobile phone may control two antenna units in each antenna pair to be coupled to a same radio frequency channel, to reconstruct a directivity pattern of an antenna system. For example, as shown in FIG. 18, E1 and E2 may be connected to Main, to reconstruct a directivity pattern of the main antenna, and overcome communication quality deterioration resulting from a null in the directivity pattern of E1. Likewise, E3 and E4 may be connected to Div, to reconstruct a directivity pattern of the diversity, and overcome communication quality deterioration resulting from a null in the directivity pattern of E3; E5 and E6 may be connected to the MIMO 1, to reconstruct a directivity pattern of the antenna corresponding to the MIMO 1, and overcome communication quality deterioration resulting from a null in the directivity pattern of E5; and E7 and E8 may be connected to the MIMO 2, to reconstruct a directivity pattern of the main antenna corresponding to the MIMO 2, and overcome communication quality deterioration resulting from a null in the directivity pattern of E7. It can be learned that in this example, the eight antenna units are separately coupled to four radio frequency channels. Therefore, a multi input multi output mechanism with a maximum of 4×4 MIMO can be provided.

In addition, the mobile phone may further control two antenna units in each antenna pair for reconstruction of a quantity, to implement adaptive adjustment of a throughput rate. The solution is similar to the foregoing example. Details are not described herein.

It should be understood that in the foregoing description of FIG. 13 to FIG. 18, the following examples are separated provided: an example in which two antenna units in an antenna pair are symmetrical with respect to a fold axis, and an example in which two antenna units in an antenna pair are asymmetrical with respect to a fold axis. In some other implementations of this application, a plurality of antenna pairs in an electronic device may include both an antenna pair with symmetrically disposed antenna units and an antenna pair with asymmetrically disposed antenna units. A specific selection rule may be flexibly selected based on an actual requirement. In various different compositions, a method for reconstructing a directivity pattern of an antenna system and reconstructing a quantity is similar to the description in the foregoing example. Details are not described herein.

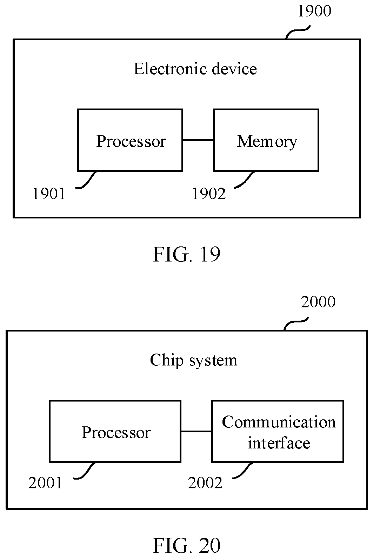

FIG. 19 is a schematic diagram of composition of an electronic device 1900. As shown in FIG. 19, the electronic device 1900 may include a processor 1901 and a memory 1902. The memory 1902 is configured to store computer-executable instructions. For example, in some embodiments, when the processor 1901 executes the instructions stored in the memory 1902, the electronic device 1900 is enabled to perform the antenna switching method shown in any one of the foregoing embodiments.

It should be noted that in some implementations of this example, the electronic device 1900 may further include the communication system shown in FIG. 5. For example, composition of the antenna module 600 in the communication system may be the same as or similar to composition of the antenna system shown in FIG. 6. In some other implementations, the memory 1902 in the electronic device 1900 may include an external memory interface and/or an internal memory. The electronic device 1900 may further include a universal serial bus (universal serial bus, USB) interface, a charging management module, a power management module, a battery, a mobile communication module, a wireless communication module, an audio module, a loudspeaker, a telephone receiver, a microphone, a headset jack, a sensor module, a button, a motor, an indicator, a camera, a screen, a subscriber identification module (subscriber identification module, SIM) card interface, and the like. For example, the sensor module may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

FIG. 20 is a schematic diagram of composition of a chip system 2000. The chip system 2000 may include a processor 2001 and a communication interface 2002, and is configured to support a related device in implementing the functions in the foregoing embodiments. In a possible design, the chip system further includes a memory. The memory is configured to store program instructions and data that are necessary for a terminal. The chip system may include a chip, or may include a chip and another discrete device. It should be noted that in some implementations of this application, the communication interface 2002 may also be referred to as an interface circuit.

It should be noted that all related content of the solutions shown in FIG. 19 and FIG. 20 above may be cited as function descriptions of corresponding functional modules. Therefore, corresponding beneficial effects can be obtained, and details are not described herein again.

All or some of functions, actions, operations, steps, or the like in the foregoing embodiments may be implemented by software, hardware, firmware, or any combination thereof. When a software program is used to implement embodiments, the embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to specific features and the embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations, or equivalents that cover the scope of this application. It is clear that a person skilled in the art can make various modifications and variations to this application without departing from the spirit and scope of this application. In this way, this application is intended to cover these modifications and variations of this application provided that they fall within the scope defined by the claims of this application and their equivalent technologies.

## Claims

1. A wireless communication system, applied to an electronic device, wherein the wireless communication system comprises:
a first radio frequency channel;
a first antenna unit;
a second antenna unit; and
a first switching apparatus, configured to selectively connect at least one of the first antenna unit and the second antenna unit to the first radio frequency channel, wherein
in a first state, the first switching apparatus is configured to connect the first antenna unit to the first radio frequency channel, and the first switching apparatus is further configured to connect the second antenna unit to the first radio frequency channel; or
in a second state, the first switching apparatus is configured to connect the first antenna unit to the first radio frequency channel, and the second antenna unit is disconnected from the first radio frequency channel.

2. The wireless communication system according to claim 1, wherein in the first state, signals flowing through the first antenna unit and the second antenna unit are both first signals; and
in the second state, a signal flowing through the first antenna unit is a second signal, and the second signal does not flow through the second antenna unit.

3. The wireless communication system according to claim 2, wherein in the first state, a radio frequency parameter of the first signal is a first parameter, and in the second state, a radio frequency parameter of the second signal is a second parameter, wherein the first parameter and the second parameter are different.

4. The wireless communication system according to claim 3, wherein the radio frequency parameter comprises a reference signal received power RSRP and/or a bit error rate.

5. The wireless communication system according to any one of claims 1 to 4, wherein the wireless communication system further comprises a second radio frequency channel; and
in a third state, the first switching apparatus is configured to connect the first antenna unit to the first radio frequency channel, the first switching apparatus is further configured to connect the second antenna unit to the second radio frequency channel, a signal flowing through the first antenna unit is a third signal, and a signal flowing through the second antenna unit is a fourth signal.

6. A foldable electronic device, comprising a flexible screen and the wireless communication system according to any one of claims 1 to 5, wherein
the foldable electronic device comprises a first folded state and a second folded state;
in the first folded state, the wireless communication system is in the first state; and
in the first folded state, the wireless communication system is in the second state.

7. The foldable electronic device according to claim 6, wherein the flexible screen comprises a first part and a second part, the first antenna unit is located in the first part, the second antenna unit is located in the second part, and the first part and the second part rotate relative to each other.

8. A wireless communication method, wherein the method is applied to an electronic device, the electronic device is provided with the wireless communication system according to any one of claims 1 to 5 and one or more processors, and the method comprises:
sending, by the processor, first control information to the first switching apparatus, wherein the first control information is used to control the first switching apparatus to work in a first working state, and
in the first working state, the first switching apparatus is configured to connect the first antenna unit to the first radio frequency channel, and the first switching apparatus is further configured to connect the second antenna unit to the first radio frequency channel; or
sending, by the processor, second control information to the first switching apparatus, wherein the second control information is used to control the first switching apparatus to work in a second working state, and
in the first working state, the first switching apparatus is configured to connect the first antenna unit to the first radio frequency channel, and the second antenna unit is disconnected from the first radio frequency channel.

9. The wireless communication method according to claim 8, wherein when the first switching apparatus is in the first working state, signals flowing through the first antenna unit and the second antenna unit are both first signals; and
when the first switching apparatus is in the second working state, a signal flowing through the first antenna unit is a second signal, and the second signal does not flow through the second antenna unit.

10. The wireless communication method according to claim 9, wherein when the first switching apparatus is in the first working state, a radio frequency parameter of the first signal is a first parameter, and when the first switching apparatus is in the second working state, a radio frequency parameter of the second signal is a second parameter, wherein the first parameter and the second parameter are different.

11. The wireless communication method according to claim 10, wherein the radio frequency parameter comprises a reference signal received power RSRP and/or a bit error rate.

12. The wireless communication method according to any one of claims 8 to 11, comprising:
sending, by the processor, third control information to the first switching apparatus, wherein the third control information is used to control the first switching apparatus to work in a third working state; and
in the third working state, the first switching apparatus is configured to connect the first antenna unit to the first radio frequency channel, the first switching apparatus is further configured to connect the second antenna unit to the second radio frequency channel, a signal flowing through the first antenna unit is a third signal, and a signal flowing through the second antenna unit is a fourth signal.

13. A processor, wherein the processor is disposed in an electronic device, and the processor is configured to perform the wireless communication method according to any one of claims 8 to 12.

14. An electronic device, wherein the electronic device is provided with one or more processors according to claim 13, a memory, and the wireless communication system according to any one of claims 1 to 5;
the one or more processors are coupled to the memory and the wireless communication system, and the memory stores computer instructions; and
when the one or more processors execute the computer instructions, the electronic device is enabled to perform the wireless communication method according to any one of claims 8 to 12.

15. An antenna system, applied to an electronic device, wherein the antenna system comprises:
N switching apparatuses and M antenna units, wherein one switching apparatus corresponds to at least two antenna units, at least two antenna units corresponding to one switching apparatus constitute one antenna pair, N is a positive integer, and M is an integer greater than N;
an output terminal of a first switching apparatus is coupled to a first antenna pair, the first switching apparatus is any one of the N switching apparatuses, and at least two antenna units comprised in the first antenna pair are comprised in the M antenna units; and
the first switching apparatus has a first working state and a second working state; when the first switching apparatus works in the first working state, a direction in which a null in a directivity pattern of the antenna system is is a first direction; when the first switching apparatus works in the second working state, a direction in which a null in a directivity pattern of the antenna system is is a second direction; and the first direction and the second direction are different.

16. The antenna system according to claim 15, wherein frequency bands covered by the at least two antenna units that are comprised in the first antenna pair partially or completely overlap.

17. The antenna system according to claim 15 or 16, wherein the first switching apparatus works in the first working state; and
when a reference signal received power RSRP is less than a first threshold, or when a bit error rate is greater than a second threshold, or when an RSRP is less than a first threshold and a bit error rate is greater than a second threshold,
a working status of the first switching apparatus switches from the first working state to the second working state.

18. The antenna system according to any one of claims 15 to 17, wherein
a quantity of antenna units performing signal reception and/or transmission in the first antenna pair in a case in which the first switching apparatus works in the first working state differs from a quantity of antenna units performing signal reception and/or transmission in the first antenna pair in a case in which the second switching apparatus works in the first working state.

19. The antenna system according to any one of claims 15 to 18, wherein
when a throughput rate of the electronic device is less than a third threshold, the first switching apparatus works in the first working state.

20. The antenna system according to claim 19, wherein the first switching apparatus further has a third working state, and a quantity of antenna units performing signal reception and/or transmission in the first antenna pair in a case in which the first switching apparatus works in the third working state is greater than a quantity of antenna units performing signal reception and/or transmission in the first antenna pair in a case in which the first switching apparatus is in the first working state or is in the second working state; and
when the throughput rate of the electronic device is greater than a fourth threshold, the first switching apparatus works in the third working state, wherein the fourth threshold is greater than or equal to the third threshold.

21. The antenna system according to any one of claims 15 to 20, wherein the antenna system further comprises a second switching apparatus and a second antenna pair;
an output terminal of the second switching apparatus is coupled to the second antenna pair, the second switching apparatus is any one of the N switching apparatuses, and at least two antenna units comprised in the second antenna pair are comprised in the M antenna units; and
the second switching apparatus has at least a first working state and a second working state; when the first switching apparatus works in the first working state, a direction in which a null in a directivity pattern of the antenna system is is a first direction; when the first switching apparatus works in the second working state, a direction in which a null in a directivity pattern of the antenna system is is a second direction; and the first direction and the second direction are different.
